(19) Europäisches Patentamt
European Patent Office
Office européen des brevets

(11) EP 1 406 245 A2

(12) **EUROPEAN PATENT APPLICATION**

(43) Date of publication:
**07.04.2004 Bulletin 2004/15**

(51) Int Cl.[7]: **G11B 5/48**

(21) Application number: **03021683.2**

(22) Date of filing: **29.09.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **27.09.2002 JP 2002283193**

(71) Applicant: **MATSUSHITA ELECTRIC INDUSTRIAL CO., LTD.**
**Kadoma-shi, Osaka 571-8501 (JP)**

(72) Inventors:
- **Ueno, Yoshihiro**
  **Hirataka-shi Osaka 573-1194 (JP)**
- **Kuwajima, Hideki**
  **Kyoto-shi Kyoto 606-8286 (JP)**
- **Deng, Zhisheng**
  **Moriguchi-shi Osaka 570-0092 (JP)**

(74) Representative: **Grünecker, Kinkeldey,**
**Stockmair & Schwanhäusser Anwaltssozietät**
**Maximilianstrasse 58**
**80538 München (DE)**

(54) **Head support device and disk drive using same**

(57) The present invention is a head support device which is thin and may assure excellent flexibility and shock resistance while applying a sufficient load to the head, and a disk drive using the device. Specifically, it comprises a support arm, and a head disposed at one end of the support arm, which is mounted on a head slider so as to be opposed to the recording medium, an elastic member such as a plate spring member which renders the support arm an activating force in a direction vertical to the recording medium when the support arm comes to the rotational center in vertical rotation against the recording medium, and a spring fixing member connected to the elastic member, wherein when an external impact force is applied to the head slider, suppose the distance from the action point of load that activates the head slider toward the recording medium to the immovable point in the rotation of the head slider in the direction of pitch is Lo, and the length of head slider 1 in the direction of air flow is Ls, then 0.5 < Lo < Ls < 2, thereby achieving the purpose. Thus, it is possible to provide a disk drive which may assure excellent shock resistance, high access speed, and reliability.

Fig. 2

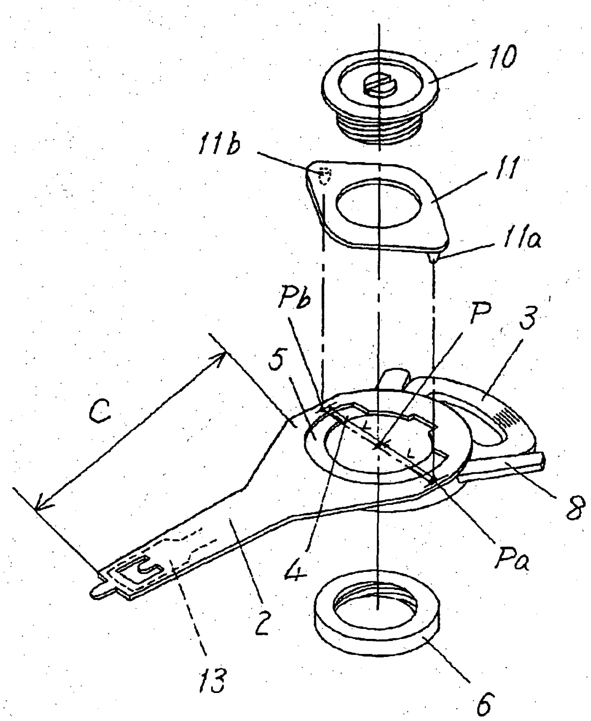


EP 1 406 245 A2

## Description

FIELD OF THE INVENTION

The present invention relates to a head support device using a head slider provided with a floating type head for recording and reproducing operation on a disk-like recording medium such as a magnetic disk and optical magnetic disk, and a disk drive for recording and reproducing operation by using the device.

BACKGROUND OF THE INVENTION

Recently, there is a remarkable advance in technology of a disk drive (hereinafter also called a disk recording and reproducing unit) for recording and reproducing operation on a disk-like recording medium (hereinafter also called a recording medium) such as a hard disk and optical disk, and the use is expanding in various fields in addition to its conventional use for computers. Such a disk drive is further required to be capable of higher density recording, stable recording and reproducing without damage to the recording medium or the head slider even in case of receiving disturbance such as shocks, and to be reduced in size so that it can be mounted on portable equipment.

As an example of a head support device of a disk drive having a conventional floating type head, a conventional head support device in a magnetic recording and reproducing unit such as a hard disk drive will be described by using the drawings.

Fig. 17 is a plan view showing the configuration of a head support device of a conventional magnetic recording and reproducing unit, and the relationship between the head support device and magnetic recording medium (hereinafter also called disk).

In Fig. 17, head support arm 108 of head support device 100 comprises support arm 102 being relatively low in rigidity, plate spring 103, and support arm 104 being relatively high in rigidity, and head slider 101 provided with magnetic head (not shown) is disposed on the underside of one end portion of the support arm 102.

Also, magnetic recording medium 107 is arranged so as to be rotated by spindle motor 109, and when the magnetic recording and reproducing unit is operated, the magnetic head mounted on the head slider 101 obtains a given amount of floatation due to the relation between the buoyancy created by the air flow produced by the rotation of the magnetic recording medium 107 and the activation of the head support device 100 which activates the head slider 101 toward the magnetic recording medium 107.

The head support device 100 during recording and reproducing operation is rotated about bearing portion 105 by the action of voice coil 106 disposed on the support arm 104, and thereby, the magnetic head mounted on the head slider 101 is positioned against the desired track of the magnetic recording and reproducing medium 107 in order to execute the recording and reproducing operation.

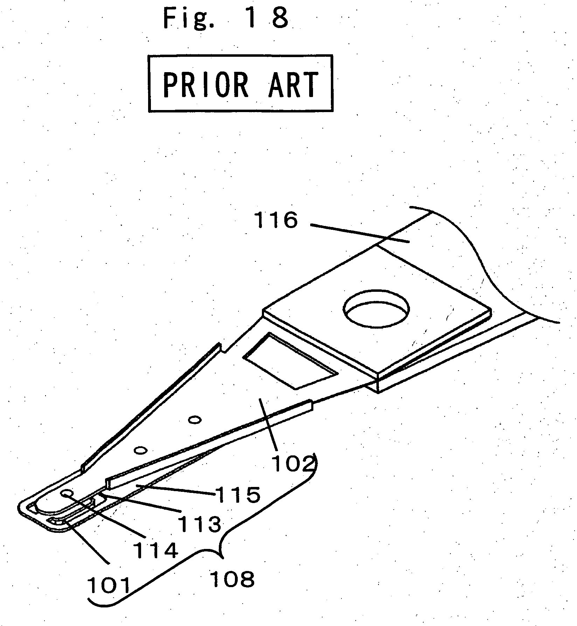

Next, the configuration and action of a conventional head support device will be described in detail with reference to Fig. 18.

Fig. 18 is a perspective view of an essential portion of the head support arm 108 comprising the support arm 102 and the head slider 101 in a conventional head support device. The head slider 101 is fixed on tongue-like portion 113 disposed at the end of flexure 115. Also, the other end of the flexure 115 is fixed on the support arm 102. For example, a ginbal spring is used as the flexure 115, which is configured so as to be able to pitch and roll against the head slider 101. The head slider 101 is fixed onto the flexure 115, for example, by using adhesive, while the flexure 115 is fixed onto the support arm 102, for example; by welding. The end portion of support arm 102 is provided with dimple 114 which serves to apply a load to the head slider 101, and a predetermined load is applied to the head slider 101 via the dimple 114. The configuration of the head support arm 108 includes the support arm 102 having the dimple 114, the flexure 115 having the tongue-like portion 113, and the head slider 101.

By using such head support arm 108, when recording and reproducing operation is executed on the magnetic recording and reproducing medium 107 (not shown in Fig. 18) being rotated, the head slider 101 is subjected to three forces such as a load applied via the dimple 114, a positive force that acts to float up from the magnetic recording medium due to the air flow, and a negative force that acts to approach the magnetic recording medium, and then, the head slider 101 is floated due to the balance of these forces, and in a state of keeping the amount of floatation, it executes the recording and reproducing operation by an information conversion element (not shown) while driving a rocking means for positioning to a predetermined track position.

However, in the conventional disk drive, when external shocks are given to the unit, the head slider bumps against or comes into contact with the recording medium, causing the head slider and the recording medium to be worn or damaged, which may sometimes result in breakdown of the data or damage to the device. Accordingly, a method for preventing external vibration from being transmitted to the main body of the device is proposed (for example, refer to Japanese Laid-open Patent H9-153277) in that there is provided a fitting member for receiving external vibration, and the main body of the disk drive is bonded to the fitting member by using a heat insulating member of flexible structure. Thus, a disk drive which is strong against external vibration can be realized, but the whole device is relatively large in size, and it is difficult to mount such a device in portable equipment required to be small-sized and light-weight.

Accordingly, it is necessary to improve the shock resistance of the head slider and support arm or head support arm itself and at the same time to achieve the purposes such as miniaturization of the disk drive and improvement of its shock resistance. Particularly, since the head slider is opposed to the recording medium while keeping a delicate amount of floatation against the recording medium, it is required to prevent the head slider and the recording medium from being seriously damaged when shocks are given thereto. However, the shape of the surface opposing to recording medium of the head slider is not usually devised for the purpose of improving the shock resistance, but in many cases, improvements are made in various ways in order to stabilize the amount of floatation at the air outflow side where the information conversion element is disposed as against the variations of skew angle and atmospheric pressure.

For example, there is a proposal of a head slider configuration such that a positive pressure generating section for generating great positive pressures and a negative pressure generating section for generating negative pressures are concentrated at the air outflow side in order to increase the rigidity of air layer at the air outflow side (for example, refer to Japanese Laid-open Patent H-10-283622). In such a configuration, when the head slider pitches and changes in its floating posture, there exists a point as focal point at which the amount of floatation does not vary, and the position of this focal point can be near the air outflow end where the information conversion element is disposed. In this way, it is possible to execute stable recording or reproducing of information almost without change in the amount of floatation near the information conversion element due to the action of positive and negative pressures even in case of variations of the skew angle, the atmospheric pressure, the external forces due to rocking, or the load.

Also, as a head slider structure for reliably realizing a low-level amount of floatation, there is a proposal of a head slider configured in that there exists a position as immovable point at which the amount of floatation does not vary, and the immovable point is positioned at the air outflow end side (for example, refer to Japanese Laid-open Patent H8-227514). That is, in a head slider wherein, when a push load is applied in the direction of the recording medium, it causes the generation of a positive pressure that acts to float the head slider with the viscous flow of air generated by the rotation of the recording medium and a negative pressure generated by the air flowing into the groove formed in the head slider surface, the head slider is structurally such that the center of negative pressure generation is positioned a little closer to the air inflow side than to the action point of the push load.

Due to this structure, when an external force (moment) acts on the head slider to move it upward, a negative force acts to cope with the external force so that the head slider can be kept in a stable state. That is, it is disclosed that even when an external force acts to move the head slider upward, a negative force will act against the external force, and since the air outflow end side of the head slider fitted with the information conversion element is substantially the rotational center of balance or the immovable point, the distance from the information conversion element to the recording medium surface remains almost unchanged.

As described above, in a head support device of a magnetic recording and reproducing unit, it has been necessary to apply a predetermined load in the direction of the magnetic recording medium to the head slider in order to prevent off-tracking of the magnetic head mounted on the head slider by keeping the head slider in a stable state of floating even in case of external shock or vertical movement of the magnetic recording medium during the recording and reproducing operation. Also, in the recording and reproducing operation of the magnetic recording medium, it has been necessary for the head support device to have appropriate flexibility so that the head slider may follow the vertical movement or the like of the magnetic recording medium. Further, in order to reduce the size of the magnetic recording and reproducing unit, to reduce the thickness in particular, it has been necessary to thin the head support device in a direction vertical to the magnetic recording medium surface.

However, in a conventional head support device, as described above, since it is configured in that a support arm is connected by a plate spring to a coupling portion, it is required to satisfy the incompatible requirements in order to satisfy various requirements for the head support device. That is, specifically, firstly to obtain a stable floating status of the head slider with the magnetic head mounted thereon, it has been necessary for the plate spring to have a reaction force that is enough to apply a necessary load to the head slider.

Also, it has been necessary for the head support device to have appropriate flexibility in order to prevent the load applied by the head slider to the magnetic recording medium from being varied due to the vertical movement of the magnetic recording medium or the manufacturing variations or the like of the distance between the head slider and the magnetic recording medium of every magnetic recording and reproducing unit in mass-production. In the conventional head support device, it has been designed in that there is provided a notch in plate spring 103 as shown in Fig. 17, which serves to lower the rigidity of the plate spring 103 and to lessen the spring constant for the purpose of providing it with flexibility.

Also, in case the support arm is structurally thinned in order to lower the rigidity of the plate spring, the frequency at main resonance point, that is so-called resonant frequency, is low and causes a vibration mode such as twisting when the head support device is moved for positioning, and consequently, it takes much time for settling the vibration mode then generated, resulting in arising a limitation in shortening the access time.

Further, in the conventional head support device, since the center of gravity is positioned a little closer to the magnetic head than to the plate spring, when strong shock or the like is given to the magnetic recording and reproducing unit from the outside, the buoyancy due to the air flow generated due to the rotation of the magnetic recording medium is unbalanced against the activating force of the head support device which activates the head slider toward the magnetic recording medium side, and then a phenomenon takes place such that the head slider jumps from the magnetic recording medium. As a result, the head slider bumps against the magnetic recording medium and it may cause magnetic damage or mechanical damage to the magnetic recording medium.

Also, in the above example of a head slider, to prevent the variation of the amount of floatation at the air outflow end where the information conversion element is disposed, a surface opposing to magnetic recording medium is provided and a load action point is arranged so that the immovable point or focal point is positioned at the air outflow end of the head slider. Accordingly, even when the floating posture is changed due to variation of the skew angle, the atmospheric pressure, or the load, the amount of floatation can be stabilized at the air outflow end side where the information conversion element is disposed. However, comparing such variation with a shock applied from outside, the shock is far greater than the variation, and therefore, it cannot be said that the proposal described above is effective to cope with shocks.

That is, when a great shock is applied to the head slider of which the immovable point or the focal point is positioned at the air outflow end, there may arise a situation such that the head slider is of negative pitch angle, that is, the amount of floatation at the air inflow end side is less than the amount of floatation at the air outflow end side. In that case, it is unable to form an air layer between the surface opposing to magnetic recording medium and the surface of the magnetic recording medium, then the head slider does not float at all and is damaged bumping against the recording medium.

Also, in the proposal, the point at which the amount of floatation remains unchanged even in case of variation in skew angle or the like is defined as the focal point, and the surface opposing to magnetic recording medium is shaped so that the position corresponds to the air outflow end. Thus, nothing is mentioned about whether or not the immovable point corresponds to the focal point when external shocks are applied to the head slider.

Further, regarding the proposal of a configuration such that the position at which the amount of floatation remains unchanged is an immovable point, and the immovable point is positioned at the air outflow end side, the amount of floatation at the air outflow end side can be controlled in the case of such a rotational moment as to move the head slider upward, but in a direction vertical to the recording medium surface, especially in the case of downward shock applied to the recording medium surface, the head slider may bump against the recording medium surface even due to slight shock.

Moreover, in a disk drive mounted in portable equipment, it is necessary to reduce the diametric size of the recording medium and also to lower the recording medium rotating speed, and the speed of air flow on the surface opposing to magnetic recording medium of the head slider becomes lower as compared with the prior art. In case the speed is at such a low level, when negative pitch angle is generated at the head slider due to shock, it is unable to form an air layer, and the possibility of bumping against the recording medium is very much increased, but nothing is disclosed about this matter in the above example of disclosure.

The above problems are not peculiar to the magnetic recording and reproducing unit, and there have arisen similar problems in a disk drive having a floating type head such as an optical disk drive and optical magnetic disk drive.

## SUMMARY OF THE INVENTION

The present invention is intended to solve these problems, and the object of the invention is to provide a head support device comprising a head slider whose shock resistance is improved because the head slider rotates in the direction of pitch when an external shock is applied to the head slider, which ensures high flexibility while applying an adequate load to the head, which is thin and assures excellent shock resistance, and a disk drive using the device.

In order to solve the problems, the head support device of the present invention comprises a head, a support arm with the head disposed at one end thereof and an elastic member formed near the other end, and a first base arm having a coupling portion projected at one end, wherein the end of the elastic member is fixed on the first base arm, and the support arm or the first base arm is provided with a vertical rotation supporting point. Also, it comprises a head, a support arm with the head disposed at one end thereof and an elastic member formed near the other end, and a first base arm having a coupling portion projected at the other end, wherein the end of the elastic member is fixed on the first base arm, and the support arm or the first base arm is provided with a vertical rotation supporting point, and the head is disposed apart from the vertical rotation supporting point in the longitudinal direction of the support arm, opposing to the recording medium of the head slider. Also, it is configured in that near the other end of the support arm at the opposite side of the head, an elastic member is formed one-piece with the support arm along the longitudinal center line of the support arm. Also, it is configured in that the head is mounted on a head slider, and the head slider is fitted on one end of the support arm via flexure. Also, it is configured in that a balancer is fitted on the other end of said support arm across said vertical rotation supporting point from said slider. Also, the head support device of the present invention is configured in that the surface opposing to recording medium is such that, when an external shock is applied to the head slider, suppose the distance from the action point of load that activates the head slider in the direction of the recording medium to the immovable point when the head slider rotates in the direction of pitch is Lo; the length in the air flow direction from the air inflow end of the head slider from end at to the air outflow end thereof is Ls; then $0.5 < Lo < Ls < 2$, and when an external shock is applied to the head slider, suppose the distance from the action point of load that activates the head slider toward the recording medium to the immovable point when the head slider rotates in the direction of pitch is Lo; the length in the direction of air flow from the air inflow end of the head slider to the air outflow end thereof is Ls; the pitch angle of the head slider being afloat over the recording medium surface is $\theta p$; and the amount of floatation from the recording medium surface at the air outflow end of the head slider is Xt, then $1 \leq Lo / Ld \leq 2.5$, where $Ld = (Ls / 2) + (Xt / \tan(\theta p))$. Also, the head support device of the present invention is configured in that the elastic member is symmetrical about the center line in the longitudinal direction of the support arm and peripherally provided with a U-shaped, V-shaped or ⊐-shaped through-hole. Also, the head support device of the present invention is configured in that the vertical rotation supporting point disposed on support arm or first base arm has two pivots. Also, the support device of the present invention is configured in that the overall center of gravity as the total center of gravity of the head slider, flexure, support arm and balancer is positioned on a plane vertical to the recording medium including the line that connects the respective peaks of the two pivots, thereby setting the mass of the balancer, the center of gravity position, and the fitting position. Also, the head support device of the present invention is configured in that the two pivots are disposed symmetrically about the center line in the longitudinal direction of the support arm. Also, the head support device of the present invention is configured in that a side reinforcement is disposed on the side surface in the longitudinal direction of the support arm or a side reinforcement is formed by bending. Also, the head support device of the present invention is configured in that there is provided the second base arm having a hole for connection to the coupling portion of the first base arm at one end thereof, a bearing portion, and a driving means on the other end thereof. Also, the head support device of the present invention is configured in that the immovable point is obtained from the ratio of the rotational rigidity of the air layer generated between the surface opposing to recording medium of the head slider and the recording medium to the rotational rigidity as against the vertical displacement. Also, the head support device of the present invention is configured in that the positive pressure generator disposed on the surface opposing to recording medium comprises a first positive pressure generator formed at a predetermined position so as to be perpendicular to the direction of air flow from the air inflow end of the head slider, and a second positive pressure generator formed at a predetermined position from the air outflow end at the widthwise center vertical to the air flow direction of the head slider, and that the negative pressure generator is formed between the first positive pressure generator and the second positive pressure generator, and the negative pressure center is positioned near to the air outflow end side than to the action point of load that activates the head slider toward the recording medium. Also, the head support device of the present invention is configured in that side rails are disposed on either side in the widthwise direction of the head slider for the purpose of connection to the first positive pressure generator. Also, the head support device of the present invention is configured in that the negative pressure generator is disposed in a nearly surrounded region at the middle stage that is lower than the surface of the positive pressure generator and higher than the surface of the negative pressure generator with reference to the surface of the positive pressure generator. Also, the head support device of the present invention is configured in that the action point of load that activates the head slider toward the recording medium is the center of gravity of the head slider. Also, the head support device of the present invention comprises a head support arm provided with a head slider holding member which holds the head slider and a support arm which fixes the other end of the head slider holding member. Further, the head support device of the present invention is configured in that the suction toward the recording medium generated on the air lubricated surface of the head slider is greater than the equivalent mass of the head support device.

By using these configurations, it is possible to provide a head support device which is excellent in flexibility and shock resistance and capable of high-speed access while applying an adequate load to the head, and also, the support arm supported on the pivot as a vertical supporting point is able to freely rotate in a direction vertical to the recording surface of the recording medium, thereby realizing a head support device that may execute novel operation unlike the prior art.

Further, by using these configurations, no rotational force against external shock is generated around the line (rotational axis) that connects the respective peaks of the two pivots disposed on one of the first base arm and the support arm, and therefore, and therefore, the head slider can be prevented from bumping against the recording medium surface causing damage to the head or recording medium mounted on the head slider. Accordingly, it is possible to realize a head support device which is stable and free from excessive vibrations.

Also, in order to solve the above problems, the disk drive of the present invention comprises a recording medium with a recording medium layer formed on the surface, a rotating means for rotating the recording medium, and a head support device provided with a head slider with a head mounted on one end and a driving means mounted on the other end thereof, wherein the head support device includes a support arm with a head disposed on one end and an elastic member integrally formed along the longitudinal center line near the other end, a balancer fitted on the other end of the support arm, and a first base arm having a projected coupling portion on one end, and the end portion of the elastic member is fixed on the first base arm, and the support arm or the first base arm is provided with a vertical rotation supporting point. Also, the disk drive of the present invention comprises a recording medium with a recording medium layer formed on the surface, a rotating means for rotating the recording medium, and a head support device provided with a head slider with a head mounted on one end and a driving means mounted on the other end thereof, wherein the head support device includes a support arm with a head disposed on one end and an elastic member integrally formed along the longitudinal center line near the other end, a balancer fitted on the other end of the support arm, and a first base arm having a projected coupling portion on one end, and the end portion of the elastic member is fixed on the first base arm, and the support arm or the first base arm is provided with a vertical rotation supporting point, and the head, Opposing to the recording medium of the head slider, is positioned apart from the vertical rotation supporting point in the longitudinal direction of the support arm.

By using these configurations, a head support arm comprising a stable head support device can be realized, and it is possible to realize a disk drive which ensures high shock resistance and excellent reliability such as high-speed access.

Further, the head slider can be prevented from bumping against the recording medium surface or the bumping energy can be reduced to prevent the head slider or the recording medium from being damaged even when great shock is applied to the head slider in a state of being afloat over the recording medium. Accordingly, it is possible to manufacture a head support device and a disk drive ensuring excellent reliability and also to mount a large-capacity, compact and thin disk drive in portable equipment.

BRIEF DESCRIPTION OF THE DRAWINGS

Fig. 1 (a) is a side view showing the general configuration of a head support device in the first preferred embodiment of the present invention.

Fig. 1 (b) is a plan view showing the general configuration of a head support device in the first preferred embodiment of the present invention.

Fig. 2 is a perspective view showing the configuration of a head support device in the first preferred embodiment of the present invention.

Fig. 3 is an exploded perspective view showing the configuration of a head support device in the first preferred embodiment of the present invention.

Fig. 4 is a side view of essential parts near the bearing portion of a head support device in the first preferred embodiment of the present invention.

Fig. 5 (a) is a perspective view from the surface opposing to recording medium of a head slider disposed on a head support device in the first preferred embodiment of the present invention.

Fig. 5 (b) shows the surface opposing to recording medium of a head slider disposed on a head support device in the first preferred embodiment of the present invention.

Fig. 6 is a schematic diagram for describing the head slider displacement and immovable point distance before and after application of shock to the head slider.

Fig. 7 (a) is a schematic diagram for describing the alteration of the floating status with shock applied to the head slider in the first preferred embodiment of the present invention.

Fig. 7 (b) is a schematic diagram for describing the alteration of the floating status with shock applied to the head slider of the comparative example 1.

Fig. 7 (c) is a schematic diagram for describing the alteration of the floating status with shock applied to the head slider of the comparative example 2.

Fig. 8 (a) is a plan view from the surface opposing to recording medium of a head slider having another recording medium opposing surface in the first preferred embodiment of the present invention.

Fig. 8 (b) is a plan view from the recording medium opposing surface of a head slider having further another surface opposing to recording medium in the first preferred embodiment of the present invention.

Fig. 8 (c) is a plan view from the surface opposing to recording medium of a head slider having further another surface opposing to recording medium in the first preferred embodiment of the present invention.

Fig. 9 is a diagram showing the relationship between Lo/Ls value and shock resistance value.

Fig. 10 (a), (b) are plan views showing the recording medium opposing surface of a head slider used for the comparison with the shape of the surface opposing to recording medium of the head slider medium in the first preferred embodiment of the present invention.

Fig. 11, is a side view of main parts showing the configuration of a head support arm and a head support device in the second preferred embodiment of the present invention.

Fig. 12 is a perspective view of main parts showing the configuration of a head support arm and a head support device in the second preferred embodiment of the present invention.

Fig. 13 is an exploded perspective view of main parts of a head support arm in the second preferred embodiment of the present invention.

Fig. 14 is a side view for describing the action of the balancer of the head support arm in the second preferred embodiment of the present invention.

Fig. 15 is a diagram for describing the operation of the head slider with shock load applied in the second preferred embodiment of the present invention.

Fig. 16 is a diagram for describing the operation of the head slider with other shock load applied in the second preferred embodiment of the present invention.

Fig. 17 is a plan view showing the configuration of a head support device of a conventional magnetic recording and reproducing unit, and the relationship between the head support device and the magnetic recording medium.

Fig. 18 is a perspective view of essential parts showing a head support arm with a conventional head slider mounted thereon.

DETAILED DESCRIPTION OF THE INVENTION

The preferred embodiments of the present invention will be described in the following with reference to the drawings.

(First preferred embodiment)

First, the principle of operation of the head support device in the first preferred embodiment of the present invention is described by using a magnetic recording and reproducing unit as an example.

Fig. 1 (a) is a side view showing the general configuration of a head support device in the first preferred embodiment of the present invention, and Fig. 1 (b) is a plan view of the same.

In Fig. 1, head slider 1 mounted with a head element (not shown) for recording and reproducing purposes is fitted on a surface opposing to the recording medium 12 of support arm 2 so that the head element is opposed to the recording medium 12. As described later, the support arm 2 is supported by first bearing portion 10 and second bearing portion 11, which is able to rotate radially of the recording medium 12 due to the first bearing portion 10 and to turn vertically, making a so-called "driving" motion, against the surface of the recording medium 12 due to the second bearing portion 11.

The recording medium 12 is journaled on spindle motor 19 that is a rotating means, and in the recording or reproducing mode of the magnetic recording and reproducing unit, that is, with a magnetic head loaded, the magnetic head mounted on the head slider 1 executes recording or reproducing operation, obtaining a specific amount of floatation against the recording medium 12, due to the relationship between the buoyancy created by the air flow generated by the rotation of the recording medium 12 and the action of the head support device 9 which activates the head slider 1 toward the recording medium 12.

In Fig. 1, the support arm 2 of which the head slider 1 with a head device disposed on the underside thereof is mounted on the underside of one end thereof is fitted, at the other end, to a one end portion of plate spring 4 that is an elastic member as shown, and the other end portion of the plate spring 4 is fitted to the second bearing portion 11 via spring fixing member 5.

In this way, the support arm 2 is resiliently held on the second bearing portion 11 via the plate spring 4.

Also, the second bearing portion 11 is provided with a pair of pivots 11a and 11b (not shown), and the pivots 11a, 11b come in contact with the support arm 2 respectively at the points of Pa and Pb in Fig. 1 (b), and one end portion of the support arm 2 is activated toward the recording medium 12 due to the elastic force of the plate spring 4 that is an elastic member, thereby generating compressive stresses at contact points Pa and Pb. In case of no recording medium 12, the plate spring 4 will be deformed, causing the support arm 2 to be positioned as shown by dotted lines in Fig. 1 (a).

The pivots 11a and 11b of the second bearing portion 11 are vertical to the axial direction of rotational center with the support arm 2 rotated radially of the recording medium 12 and to the longitudinal direction of the support arm 2, which are provided so as to come in contact with the support arm 2 on the line passing through the rotational center axis.

During operation of the magnetic recording and reproducing unit or when the head slider 1 is being afloat against the recording medium 12, the load to the head slider 1 is generated by the compressive stress in the direction of the recording medium 12 to the support arm 2 due to the pivots 11a and 11b of the second bearing portion 11.

By using such configuration of the head support device 9, the support arm 2 can be formed with a highly rigid material. Accordingly, it is possible to form the head support device 9 by using a highly rigid material over the entire range from the second bearing portion 11, the pivots 11a, 11b of the second bearing portion 11, and the region supported by the second bearing portion 11 of the support arm 2 to the region where the head slider 1 is formed.

In this way, the support arm 2 is formed with a highly rigid material, and the resonance frequency of the support arm 2 can be enhanced. Accordingly, there is no generation of vibration mode that has been a conventional problem, and no settling operation is required. As a result, it enables high-speed rotation and positioning of the support arm 2 and becomes possible to improve the access speed of the magnetic recording and reproducing unit.

Also, the plate spring 4 that is an elastic member is not built into the structure of the support arm 2 but disposed independently of the support arm 2. Therefore, it is possible to select the strength and spring constant of the plate spring 4 by changing the thickness, material or the like of the plate spring 4.

Also, in a configuration using the head support device 9, by designing the head support device in such manner that the center of gravity of the portion held by the plate spring 4 that is an elastic member, for example, when rotated by a voice coil motor, the center of gravity of the support arm 2 in a state of being fitted with a voice coil and coil holder is substantially same in position as the point of intersection between the rotational axis in the radial direction of the recording medium 12 of the support arm 2, that is, the middle point P on the line connecting points Pa and Pb at which the support arm 2 comes in contact with the pivots 11a, 11b of the second bearing portion 11 (in Fig. 1 the distance between P and Pa becomes equal to the distance between P and Pb, that is L), it is possible to provide a head support device which is free from vibration and stable. In this case, it is possible to provide a head support device maximized in shock resistance, but some difference causes no problem in actual use.

Further, as shown in Fig. 1 (a), by supporting the head slider 1 with the flexure 13 formed on the support arm 2 via dimple 14 formed on the underside at one end of the support arm 2, it is possible to realize a head support device which is flexible enough to follow unnecessary vibrations or the like in the direction of pitch or roll against the recording medium 12 of the head slider 1 during the operation of the magnetic recording and reproducing unit.

As described above, in the head support device of the present invention, incompatible requirements for increasing the load to the head slider, enhancing the flexibility, and further improving the rigidity of the structure can be satisfied independently of each other as individual component elements, and the design of the head support device is simplified and it is possible to remarkably expand the freedom of design.

Furthermore, in the head support device of the present invention, since it requires no forming (bending) of very accurate elastic members (such as a plate spring) unlike a conventional head support device, it is possible to manufacture a head support device by a simpler method as compared with the prior art.

The operation of the head support device of the present invention will be described in the following by using Fig. 1.

As described above, when the recording medium 12 is stopping, the head slider 1 and the recording medium 12 are stopping in contact with each other, but as the recording medium 12 starts rotating for recording and reproducing operation, the head slider 1 is floated and the plate spring 4 that is an elastic member is deformed, causing the support arm 2 to become as shown by solid lines in Fig. 1 (a), to execute the magnetic recording and reproducing operation, keeping a specific clearance between the magnetic head and the recording medium 12.

In this case, the reaction force of the plate spring 4 that acts to return the support arm 2 to the state shown by dotted lines in Fig. 1 (a) is the load to be applied to the head slider 1.

The load can be varied by changing the material and thickness of the plate spring 4 that is an elastic member, the height of the pivots 11a and 11b of the second bearing portion 11, or the position in relation to point G in Fig. 1 (a) that is the joint between the support arm 2 and the plate spring 4.

For example, the load applied will become greater if the plate spring 4 is formed thicker by using a material of higher rigidity, and also, a greater load can be applied to the head slider 1 by heightening the pivots 11a and 11b of the second bearing portion 11 or by making the position of point G of the joint between the support arm 2 and the plate spring 4 in Fig. 1 (a) closer to point P.

Next, following the description of the operational principle of the head support device in the first preferred embodiment of the present invention, the configuration of the head support device of the present invention will be described in a little more detail.

Fig. 2 is a perspective view showing the configuration of the head support device in the first preferred embodiment of the present invention. Fig. 3 is an exploded perspective view of the head support device in the first preferred embodiment of the present invention. Fig. 4 is a side view of essential parts near the bearing portion of the head support device in the first preferred embodiment of the present invention.

As shown in Fig. 2 and Fig. 3, the head support device 9 is configured in that nearly annular plate spring (elastic member) 4 and semi-circular annular spring fixing member 5 are connected to each other, and the plate spring 4 is connected to the support arm 2. The support arm 2 is connected to the coil holder 8 fitted with voice coil 3 in such manner that it can be rotated in the radial direction of the recording medium 12 by means of the voice coil motor. These members are held between the bearing portion 10 and nut 6 together with the second bearing portion 11.

Also, as shown in Fig. 4, the whole of the head support device 9 is fastened to substrate 15 by means of screw 7 of the bearing portion 10.

The connection of each member will be described in further detail by using Fig. 4. First, at the right-hand side of the rotational axis in the figure, the top surface of the plate spring 4 (elastic member) is connected with the underside of the support arm 2, and at the left-hand side thereof, the plate spring 4 and the spring fixing member 5 are held between the bearing portion 10 and nut 6 together with the collar 11c of the second bearing portion 11. Also, the support arm 2 is fitted on the coil holder 8.

By using such configuration, it is possible to realize a configuration in which the plate spring 4 that is an elastic member deforms as to bend in two steps as shown in Fig. 4, thereby resiliently retaining the support arm 2.

Also, the bearing portion 10 is equipped with a bearing so that the support arm 2 may rotate in the radial direction of the magnetic recording medium in order to move the magnetic head disposed on the underside at one end thereof to a predetermined position.

The pivots 11a and 11b of the second bearing portion 11 are vertical to the axial direction of the bearing portion 10 and to the longitudinal direction of the support arm 2, which are disposed so as to come in contact with the support arm 2 on the line passing through the rotational center in the radial direction of the magnetic recording medium of the bearing portion 10.

Further, the pivots 11a and 11b of the second bearing portion 11 are disposed in positions symmetrical to the center line in the longitudinal direction of the support arm 2, and the support arm 2 is pushed downward by the pair of pivots 11a, 11b.

Also, by designing the head support device 9 in such manner that the center of gravity of the portion held by the plate spring 4 that is an elastic member, that is, the center of gravity of the support arm 2 in a state of being fitted with voice coil 3 and coil holder 8 is substantially same in position as the middle point P on the line connecting points Pa and Pb at which the support arm 2 comes in contact with the pivots 11a, 11b of the second bearing portion 11 (in Fig. 1 (a), the distance between P and Pa becomes equal to the distance between P and Pb, that is L), it is possible to provide a head support device which is stable and less influenced by external vibration or the like. In this case, it is possible to provide a head support device maximized in shock resistance, but some difference causes no problem in actual use.

Also, taking into account the weight of the head slider 1 and flexure 13, it is also preferable to form the head support device 9 so that the center of gravity of the support arm 2 in a state of being fitted with the voice coil 3, coil holder 8, head slider 1 and flexure 13 is substantially same in position as the point P.

Each of these members will be described in the following. First, the support arm 2 is integrally formed 64 μm in thickness by using a metal, for example, stainless steel (SUS304). An etching process or press machining process can also be employed for forming the support arm 2.

By using the support arm 2 formed in this way, the resonance frequency of its twisting can be greatly increased from about 2 kHz, conventional level, to about 10 kHz. Accordingly, it is possible to obtain a magnetic recording and reproducing unit of which the rotational speed and access speed of the head support device are very high.

By using such support arm 2, the resonance frequency of its bending can be greatly increased from about 200 Hz, conventional level, to about 2 kHz. Accordingly, it is possible to obtain a magnetic recording and reproducing unit of which the rotational speed and access speed of the head support device are very high.

As a result, it is possible to suppress the bending and deformation of the support arm 2 when shocks are applied thereto and to prevent the support arm 2 from bumping against the recording medium.

It is also preferable to provide a bend of about 0.2mm in height in a direction vertical to the recording surface of the recording medium in order to increase the longitudinal rigidity in the region, shown by C in Fig. 2, of the end portion of the support arm 2.

Also, in Fig. 3, the head slider 1 is supported by flexure 13 in such manner as to be able to incline in the direction of roll and pitch via a dimple (not shown in Fig. 3), and there is provided a magnetic head on the surface opposing to the recording medium of the head slider 1.

The spring fixing member 5 is formed 0.1 mm in thickness by using a metal, for example, stainless steel (SUS304), and the plate spring 4 that is an elastic member is formed 38 μm in thickness by using a metal, for example, stainless steel (SUS304). An etching process or press machining process can also be employed for forming these members.

Also, the coil holder 8 is formed 0.3 mm in thickness by using a metal, for example, Al or PPS (polyphenylsulfide). In the case of Al, a die casting process or press machining process can be employed for forming, and in the case of PPS, a well-known resin forming process can be employed for forming.

Also, for the connection of each member, a spot welding process, supersonic welding process, laser beam machining process and the like can be employed.

The present invention is not limited at all with respect to the manufacturing method of each member or the method of connection between the members.

By using the configuration as described above, it is possible to provide a head support device which may materialize the principle as shown in the first preferred embodiment.

Also, by configuring the head support device 9 in this way, it is possible to realize a novel operation that has never been seen in any prior art because the support arm 2 fulcrumed on the pivots 11a and 11b of the second bearing portion 11 is able to freely rotate in a direction vertical to the recording surface of the recording medium.

For example, in a CSS type magnetic recording and reproducing unit, the prior art was unable to freely move the support arm in a vertical direction, and it was necessary to prevent the head slider from being attracted to the recording medium in a stop mode. However, according to the head support device of the present invention, the support arm can be vertically operated by a well-know means, and it is possible to keep the support arm a little apart from the recording medium while the magnetic recording and reproducing unit is in a stop mode. Accordingly, it is unnecessary to provide the recording medium with a region in which the magnetic head may take shelter.

Also, in an L/UL type magnetic recording and reproducing unit, the support arm can be vertically operated by a well-know means, and it is possible to keep the support arm a little apart from the recording medium while the magnetic recording and reproducing unit is in a stop mode. Accordingly, it is possible to minimize such wasteful region of the magnetic recording medium that the magnetic head is loaded and unloaded as in the prior art.

Next, the head slider of the head support device in the preferred embodiment of the present invention will be described.

Fig. 5 (a) and Fig. 5 (b) show a perspective view from the surface opposing to the recording surface of the head slider mounted on the head support device in the first preferred embodiment of the present invention, and the surface opposing to recording medium thereof. Head slider 20 is provided with surface opposing to recording medium 26, opposed to the recording medium, on a surface of generally rectangular in shape. The recording medium opposing surface 26 comprises positive pressure generator 21, lower stage 22 including negative pressure generator 221, first middle stage 23 formed so as to connect from the air inflow end to the first positive pressure generator 211, and second middle stage 24 disposed so as to extend in the air inflow direction from the second positive pressure generator 212.

The positive pressure generator 21 comprises the first positive pressure generator 211, side rails 213 formed on either widthwise side of the head slider so as to connect to the first positive pressure generator 211, and the second positive pressure generator 212 formed in hexagonal shape as shown at the widthwise center perpendicular to the direction of spindle that is the direction of air flow at the air outflow side. The first positive pressure generator 211 is formed in a range from the air inflow end to a predetermined position continuously from the end of the first middle stage 23, which is formed of a portion perpendicular to the air inflow direction and a slanted portion for connecting the perpendicular portion to each of the side rails 213. The lower stage 22 comprises the negative pressure generator 221 almost surrounded by the first positive pressure generator 211, side rails 213, and the second middle stage 24, side lower stage 222 positioned outwardly of the side rails 213, and air outflow side lower stage 223 disposed at the air outflow side. The information conversion element 25 is integrally arranged at the air outflow end of the second positive pressure generator 212.

These manufacturing processes can be executed by a method of head slider forming or general machining as well, but it is preferable to employ a wet or dry etching process or, in case of highly accurate and complicated machining, to use a method of machining by laser beam application, ion application and the like.

In the first preferred embodiment, by using a method of ion application process, the level difference between the positive pressure generator 21, the first middle stage 23, and the second middle stage 24 is set to 0.08 $\mu$m, and the level difference between the positive pressure generator 21 and the lower stage 22 including the negative pressure generator 221 is set to 1.0 $\mu$m. As the overall shape of the head slider 20, the length in the direction of air flow, and the widthwise length and thickness at right angle to the direction of air flow are respectively 1.24 mm, 1.00 mm and 0.3 mm. Incidentally, these values are mentioned as an example, and the present invention is not limited to this example.

Further, for the comparison with the head slider in the first preferred embodiment, a head slider shaped as shown in Fig. 10 was also manufactured as trial. The elements with same functions and names as those shown in Fig. 5 are given same reference numerals, and the description is omitted. In Fig. 10, the head slider shown in (a) is called comparative example 1, and the head slider shown in (b) is called comparative example 2. Head slider 70, comparative example 1, comprises the first positive pressure generator 71 with the central portion separated at the air inflow side, the second positive pressure generator 72 formed so as to be surrounded by the second middle stage 74 at the air outflow side, and the negative pressure generator 221 disposed between the first positive pressure generator 71 and the second positive pressure generator 72. The first positive pressure generator 71 connects to the first middle stage 73 extending from the air inflow end, which also has side rails in the widthwise direction and is connected to the third middle stage 75 that is L-shaped. The second positive pressure generator 72 is surrounded by the second middle stage 74 disposed at the air outflow side, and the information conversion element 25 is formed at the air outflow end of the second positive pressure generator 72. The negative pressure generator 221 is surrounded by the first middle stage 73, the second middle stage 74, the third middle stage 75, and the first positive pressure generator 71. Side lower stage 222 is disposed at the widthwise sides of the head slider 70, and air outflow side lower stage 223 is arranged at the sides of the air outflow side in the same way as for the head slider 20 in the first preferred embodiment.

Also, the head slider 80, comparative example 2, comprises a stripe-like first positive pressure generator 81 formed so as to be held between the third middle stage 82 formed in ⊐-shape and the first middle stage 23 which is flush with the third middle stage 82, and the negative pressure generator 221 is continuous with the third middle stage 82 and is formed smaller in area. The others are same in shape as the head slider 20 in the first preferred embodiment.

Regarding the head slider 20 in the first preferred embodiment, and the head sliders 70, 80 of comparative example 1 and comparative example 2, the immovable point is obtained from air layer rigidity, followed by obtaining the maximum shock generated due to coming in contact with the recording medium when a shock is applied in the direction toward the recording medium, for the purpose of evaluating the shock resistance. In the evaluation of shock resistance, the equivalent mass including the head slider and the head slider holding section is 1 mg, the load from the support arm is 2 gf, the recording medium rotating speed is 4,500 rpm, and the skew angle at 6 mm radially of the recording medium is - 5 degrees.

Further, the immovable point obtained from air layer rigidity is described by using Fig. 6. The state of head slider 30 being afloat over the recording medium 12 by pitch angle θp and the amount of floatation Xt at the air outflow end is shown by solid lines, and the state of head slider 30a being displaced by vertical displacement x and angular displacement 0 due to impact force F applied to the head slider 30 is shown by chain lines. Immovable point G is shown by the intersection of the extended lines of the head slider 30 in a steady state of being afloat and the head slider 30a after being displaced by shocks, as shown in Fig. 6. The action point P1 of load is the center of head slider 30 in the direction of air flow, to which the load from a support arm (not shown) is also applied.

The center of the surface opposing to recording medium 12 of the head slider 30 rotates about the center of immovable point G from P1 in a steady state of being afloat to the position of P2 after displacement. Distance Lo from the action point P1 to the immovable point G can be obtained by formula (1) because θp is very small and can be considered to be cos θp ≒ 1.

$$L_o = \frac{x}{\theta} \quad (1)$$

On the other hand, when the displacement against impact force F from outside is the rotation around the load action point P1 and the translation motion of the action point toward the recording medium 12, then it can be represented by the following formula where the displacement in a direction vertical to the recording medium 12 from the action point P1 of the load to the head slider 30 is x, and the rotation is θ.

$$\begin{pmatrix} k_{11} & k_{12} \\ k_{21} & k_{22} \end{pmatrix} \begin{pmatrix} x \\ \theta \end{pmatrix} = \begin{pmatrix} F \\ O \end{pmatrix} \quad (2)$$

In this formula, k11, k12, k21, and k22 are the coefficients of rigidity of air layer of the head slider 30, and k11 is vertical rigidity, k22 is rotational rigidity, k12 and k21 are respectively the coefficient of force in the rotating direction generated when the head slider 30 moves in a direction vertical to the recording medium 12 and the coefficient of force in the vertical direction generated due to the rotational movement. Formula (3) can be obtained by rearranging the formula as follows.

$$\begin{pmatrix} x \\ \theta \end{pmatrix} = \frac{1}{\Delta} \begin{pmatrix} k_{11} & -k_{12} \\ -k_{21} & k_{22} \end{pmatrix} \begin{pmatrix} F \\ 0 \end{pmatrix} = \frac{1}{\Delta} \begin{pmatrix} k_{22} F \\ -k_{21} F \end{pmatrix} \quad (3)$$

Accordingly, the distance Lo of the immovable point can be obtained from formula (1) and formula (3) as the ratio of rotational rigidity k22 of air layer to the coefficient of force k21 in the vertical direction generated due to the rotational movement, as shown in formula (4).

$$L_o = \frac{\times}{\theta} = -\frac{k_{22}}{k_{21}} \quad (4)$$

The rigidity coefficients k22 and k21 can be precisely obtained once the shape of the surface opposing to recording medium 12 of the head slider 30, recording medium rotating speed, equivalent mass and the like are determined, and from the value then obtained, the distance to the immovable point can be prescribed.

Obtaining the distance Lo to the immovable point G from the ratio of the above rigidity coefficients, normalized Lo/Ls as against the length Ls of head slider 30 and the result of shock resistance are shown in Table 1. The length Ls of head slider 30 is a length parallel to the recording medium 12 surface, which differs from the actual length of head slider 30, but it can be regarded as being substantially same because θp is very small and can be considered to be cos θp ≒ 1.

| | Lo/Ls | Shock resistive value: G. |
|---|---|---|
| 1 st embodiment | 0.9 | 8000 |
| Example 1 | 3.6 | 2080 |
| Example 2 | 0.45 | 4560 |

As is obvious in Table 1, in the head slider 20 of the first preferred embodiment, the value of Lo/Ls is 0.9, and the value of shock resistance is about 8000G. On the other hand, in the head slider 70 of Example 1, the value of Lo/Ls is 3.6, and the value of shock resistance is 2080G in combination with a conventional support arm, while in the head slider 80 of Example 2, the value of Lo/Ls is 0.45, and the value of shock resistance is about 4560G. Regarding the results, the description will be given by using the schematic diagrams shown in Fig. 7. The head slider 20 of the first preferred embodiment shown in Fig. 7 (a) is floating with floating clearances of Z1 and Xt respectively created at the air inflow end and air outflow end against the surface of the recording medium 12. In this condition, when impact force F is applied to the head slider 20, it is displaced to the position shown by head slider 20a, but the amount of displacement at the air outflow end is smaller as compared with the amount of displacement of the floating clearance at the air inflow end. If a shock greater than the impact force F is applied, it will be displaced to the position shown by head slider 20b, but even in such condition, the head slider will still maintain a normal pitch angle, and therefore, the air layer will not be affected and may act as spring to prevent the head slider from bumping against the recording medium. Or even when it is not completely prevented, damage will hardly take place because the bumping energy is very little. The reason for this is that, in the head slider 20 of the first preferred embodiment, the surface opposing to recording medium 12 of the head slider 20 is formed so as to be positioned in a space where the distance Lo to the immovable point is nearly equal to the length of the head slider 20.

The schematic diagram of the head slider 70 of Example 1 is shown in Fig. 7 (b). When impact force F is applied to the head slider 70 of Example 1, it is displaced to the position shown by the head slider 70a. The displacement takes place this way because the immovable point G2 is positioned in a space 3.6 times far away as compared with the length of the head slider 70. Namely, when the immovable point is positioned like this, the impact force F causes almost no rotation in the direction of pitch, resulting in generation of nearly vertical movement, and therefore, a relatively low impact force causes the air outflow end to bump against the recording medium 12.

The schematic diagram of the head slider of Example 2 is shown in Fig. 7 (c). In the case of the head slider 80 of Example 2, the ratio of Lo/Ls is 0.45, and immovable point G3 is positioned a little closer to the action point than to the air outflow end. Accordingly, even if the head slider is displaced to the position shown by head slider 80a due to impact force F, it will not bump against the recording medium 12, which is therefore improved in shock resistance as compared the head slider 70 of Example 1. However, when a shock is further applied, as shown by head slider 80b, the floating clearance at the air inflow side becomes less as compared with the floating clearance at the air outflow side, forming no air layer. In that case, no buoyancy is created, and the head slider 80 bumps against the recording medium 12 surface, causing the head slider 80 or the recording medium 12 to be damaged. The value of shock resistance that causes the floating clearance at the air inflow side to become less as compared with the air outflow side varies with not only the shape of the surface opposing to recording medium 12 but also the variation of the rotating speed and the alteration of the skew angle or the variation of load and the like. Also, when the floating clearance becomes less, it will rapidly lead to damage, increasing the variation of the shock resistance value.

Regarding the relationship between Lo/Ls value and shock resistance value, the values have been obtained with respect to various head sliders having different shapes of the surface opposing to recording medium 12. In Fig. 8, three types of shapes of the surface opposing to recording medium 12 are shown. The names that correspond to the elements and functions shown in Fig. 5 are given same reference numerals, and the description is omitted. The head slider 40 (hereafter referred to as type A) of Fig. 8 (a) includes the first positive pressure generator 41 that is stripe-formed and held between the first middle stage 23 extended from the air inflow side and the third middle stage 42 having side rails at either widthwise side thereof. The differences from the head slider 20 in the first preferred embodiment shown in Fig. 5 are that the first positive pressure generator 41 is stripe-formed and widely formed at a position close to the air inflow side and that the negative pressure generator 221 is mainly surrounded by the third middle stage 42. Therefore, in type A, the positive pressure generated at the first positive pressure generator 41 is positioned a little closer to the air inflow side as compared with the head slider 20 shown in Fig. 5.

Also, the head slider 50 (hereafter referred to as type B) of Fig. 8 (b) is such that the first positive pressure generator 51 is stripe-formed and held between the first middle stage 23 and the third middle stage 52 formed in コ-shape, and the negative pressure generator 221 is formed in a region surrounded by the third middle stage 52, and the others are same in shape as those of the head slider 20 shown in Fig. 5. Therefore, in type B, the positive pressure generated at the first positive pressure generator 51 is positioned a little closer to the air inflow side as compared with the head slider 20 shown in Fig. 5, and also, the rigidity of air layer at the portion is a little lower.

Further, the head slider 60 (hereafter referred to as type C) of Fig. 8 (c) is such that the first positive pressure generator 61 is shifted to the air inflow side to enlarge the region of the negative pressure generator 221, and the side rails disposed at either side become the third middle stage 62 in the middle thereof, and the others are same in shape as the head slider 20 shown in Fig. 5. Therefore, in type C, the positive pressure generated at the first positive pressure generator 61 is positioned a little closer to the air inflow side as compared with the head slider 20 shown in Fig. 5, and the negative pressure generated at the negative pressure generator 221 is also positioned a little closer to the air inflow side.

The Lo/Ls values and shock resistance values of these three types of head sliders are shown in Table 2.

| | Lo/Ls | Shock resistive value: G |
|---|---|---|
| Type A | 0.7 | 7200 |
| Type B | 1.6 | 6960 |
| Type C | 1.8 | 6400 |

As is obvious in the table, the Lo/Ls value is in a range from 0.7 to 1.8, and the shock resistance value ranges from 6400G to 7200G.

Fig. 9 is the result of obtaining the relationship between the Lo/Ls value and the shock resistance value with use of a head slider having different shape of surface opposing to recording medium. As is apparent in Fig. 9, when the Lo/Ls value is 0.5 or less, the shock resistance value abruptly lowers, and also, the variation of the shock resistance value increases in this range. This is because, as described above, when the immovable point is positioned more inward than the air outflow end of the head slider, the floating clearance becomes less at the air inflow end. Therefore, the Lo/Ls value is desirable to be larger than 0.5. On the other hand, when the Lo/Ls value is 1 or over, the shock resistance value is almost linearly reduced. As a shock resistance value required for mounting the disk drive in portable equipment, it is necessary to make the value 750G or over, and as an Lo/Ls value, it is desirable to make the value 2 or less. Judging from these results, it is possible to realize a disk drive which can be mounted in portable equipment by using a head slider having a surface shape opposing to recording medium such that the Lo/Ls value is larger than 0.5 and less than 2.

Further, since the negative pressure (the force by which the head slider is attracted to the recording medium) generated on the air lubricated surface of the head slider in the present preferred embodiment is about 2.5 gf, and the load from the support arm is 2 gf, the head slider does not jump from the recording medium even when it is moved apart from the recording medium with a force of 3.5 gf. The equivalent mass of the support arm of the present preferred embodiment is 1 mg, and therefore, the head slider does not jump from the recording medium even when subjected to an impact acceleration of 3500G, thereby preventing the recording medium from being seriously damaged by the head slider jumping and then bumping against the recording medium.

Also, in the above example of the shape of a head slider, the length (Ls) in the direction of air flow is 1.24 mm. Judging from the above description and the results shown in Table 1, Table 2 and Fig. 9, Ls is desirable to be in the range of 0.2mm < Ls < 1.4mm. Lower limit 0.2mm is limited by the size of information conversion element, and upper limit 1.4mm is limited by the desirable mass of head slider. Also, when the distance from the center of the head slider to the rotational center is Lk, it establishes the relation of 0.5Ls < Lk < 2Ls. And Lk is desirable to be in the range of 0.3mm < Lk < 2.0mm. This range of Lk is limited by the lower limit value of Ls and the desirable mass of head slider.

In the present preferred embodiment, described is the case of applying a load from the support arm, but the present invention is also preferable to be configured in that only the mass of the head slider itself is applied as a load, and in this case, the action point of the load corresponds to the center of gravity. Also, it is preferable that the load from the support arm acts on a position other than the center of gravity of the head slider, and in this case, the action point of the load is preferable to be at the balancing position between the load from the support arm and the center of gravity of the head slider.

Also, in the present preferred embodiment, it is intended to obtain the position of the immovable point from two movements such as in the direction vertical to the recording medium and in the direction of pitch with respect to the movement of the head slider, but it is also preferable to obtain the position including the movement in the direction of roll as in the following formula.

$$\begin{pmatrix} x \\ \theta \\ \phi \end{pmatrix} = \begin{pmatrix} k_{11} & k_{12} & k_{13} \\ k_{21} & k_{22} & k_{23} \\ k_{31} & k_{32} & k_{33} \end{pmatrix} \begin{pmatrix} F \\ 0 \\ 0 \end{pmatrix}$$

(Second preferred embodiment)

The head support device in the second preferred embodiment of the present invention will be described in the following. The remarkable differences of the head support device in the second preferred embodiment of the present invention from that in the first preferred embodiment described above are that the head support device comprises a second base arm of high rigidity provided with a first bearing portion, and a second bearing portion using a pivot positioned apart from the first bearing portion, which also includes a head support arm comprising a support arm formed of a thin member such as SUS and a first base arm. The head support arm in the second preferred embodiment is mainly related with the rotational operation in a direction vertical to the surface of the magnetic recording medium.

The head support device in the second preferred embodiment of the present invention will be described in the following with reference to the drawings. Fig. 11, Fig. 12, and Fig. 13 are diagrams for describing the head support arm and the head support device in the second preferred embodiment of the present invention. Fig. 11 is a side view of main parts, showing the configuration of the head support arm and the head support device. Fig. 12 is a perspective view of the main parts, and Fig. 13 is an exploded perspective view of main parts of the head support arm. As an example of disk drive, a magnetic recording and reproducing unit is described the same as in the first preferred embodiment.

In Fig. 11, Fig. 12, and Fig. 13, head slider 1 mounted with a magnetic head (not shown) is fixed on flexure 13, for example, integrally provided with a metal sheet such as SUS and a flexible wiring board, that is, a so-called ginbal mechanism, and further, the flexure 13 is fixed on support arm 2, and the peak of dimple 14 disposed on the support arm 2 abuts the flexure 13 in such manner that the head slider 1 fixed on the flexure 13 is able to freely move about the peak of the dimple 14. The support arm 2 is provided with plate spring 4 that is an elastic member tongue-shaped by cutting away a part of the area close to the longitudinal center line 96, and one end of the tongue-shaped plate spring 4 is secured on first base arm 91 by a well-known method such as spot welding, supersonic welding, or laser beam welding process. The plate spring 4 is preferable to be formed of other material member different from the support arm 2, and in the case of using other material member, 6ne end of the material member to become the tongue-shaped plate spring 4 is fixed on the support arm 2, and the other end is fixed on the first base aim 91 by the above well-known welding process or a like method. Also, the first base arm 91 is provided with two pivots 11a, 11b at positions symmetrical to the longitudinal center line 96 of the support arm 2, and the respective peaks of these pivots 11a, 11b are abutting the support arm 2. Accordingly, it is configured in that the support arm 2 fulcumed on the respective peaks of the two pivots 11a, 11b of the first base arm 91 is turned against the elastic force of the plate spring 4, and thereby, the head slider 1 is activated toward the recording medium in such manner that the head slider 1 fixed on the support arm 2 presses the surface of the recording medium (not shown in Fig. 12, 13). Further, the other end of the first base arm 91 is formed with coupling portion 92 made up of a hollow cylindrical projection or the like for the purpose of integration with the second base arm 94. Also, balancer is fixed on the other end (opposite end of head slider 1 with pivot 11a therebetween) of the support arm 2 so that the center of gravity in the direction of the recording medium of the head slider 1, flexure 13 and support arm 2 passes through the line that connects the respective peaks of the two pivots 11a, 11b of the first base arm 91 on which the support arm 2 is fulcumed. The head support arm 90 comprises the head slider 1 mounted with a magnetic head, the flexure 13, the support arm 2 having plate spring 4 that is an elastic member, the first base arm 91, and the balancer 93. As the balancer 93, it is preferable to electrically construct the mechanism by using an amplifier circuit or the like.

Also, the plate spring 4 that is an elastic member is formed by cutting away a part of the area close to the longitudinal center line 96 of the support arm 2, and both the right and left sides of the support arm 2 are continuous in shape generally over the entire region in the longitudinal direction. Accordingly, side reinforcement 95 can be disposed by bending each of the right and left sides generally over the entire region. By providing the side reinforcement 95 for the support arm 2, the rigidity of the support arm 2 can be greatly increased and the resonance frequency of the support arm 2 can be greatly increased from about 2 kHz, conventional level, to about 10 kHz. Therefore, the rotating speed of the head support arm 90 can be very much increased and it becomes possible to greatly increase the access speed.

The second base arm 94 has a hole portion for fastening the first base arm 91 at one end thereof, in which the first base arm 91 having the head slider 1 is fastened by a well-know method such as caulking. As a disk drive, there is provided the first bearing portion 10, and a driving means such as voice coil motor 18 at the opposite side of the first base arm 91 with the first bearing portion 10 therebetween. The head support device 9 comprises the head support arm 90 and the second base arm 94, and therefore, the length of the arm portion of either the first base arm 91 or the second base arm 94 of the head support arm 90 can be changed in accordance with the size of the recording medium and it is possible to obtain a practical configuration to cope with the standardization in the manufacture of magnetic recording and reproducing units having recording mediums of various sizes and types.

The push force with which the head slider 1 pushes the surface of the recording medium can be freely set in accordance with the material and thickness of the plate spring 4 that is an elastic member, the height of each peak of the two pivots 11a, 11b, and the position of the connection or fixed portion of the support arm 2 and the plate spring 4. For example, a great activating force can be applied by thickly forming the plate spring 4 with a material of high rigidity. Or, a great activating force can also be applied by increasing the height of each peak of the two pivots 11a, 11b.

Next, the balancer 93 mentioned above is described by using Fig. 14. With reference to the rotational axis that connects the respective peaks of the two pivots 11a, 11b disposed on the first base arm 91, suppose the distance to the center of gravity of head slider 1 is $L_1$, the distance to the center of gravity of balancer 93 is $L_2$, the mass of head slider 1 is $M_1$, the mass of balancer 93 is $M_2$, the total mass obtained by adding the mass of the rotating portion of support arm 2 to the mass of flexure 13 is $M_3$, and the distance to the center of gravity subjected to the action of the totaled mass of the rotating portion of support arm 2 and flexure 13 is $L_3$, then it is preferable to set the mass $M_2$ of balancer 93 so as to establish the following formula.

$$L_1 \times M_1 + L_3 \times M_3 = L_2 \times M_2 \qquad (5)$$

Thus, setting the respective centers of gravity of the head slider 1; flexture 13, the rotating portion of support arm 2, and balancer 93 in the head support arm 90, it is possible to prevent the head slider 1 from bumping against the recording medium 12 even in case an impact force is applied thereto. For example, suppose that an impact force is applied in the direction shown by Q in Fig. 14. Then, impact force $F_1$ proportional to mass $M_1$ will act on the head slider 1. Impact force $F_2$ proportional to mass $M_2$ will act on the balancer 93. Also, impact force $F_3$ proportional to total mass $M_3$ will act on the rotating portion of the support arm and the flexure 13.

The head support arm 90 is set so as to satisfy the formula (5), and therefore, the relations are established against these impact forces as follows:

$$L_1 \times F_1 + L_3 \times F_3 = L_2 \times F_2 \qquad (6)$$

Consequently, even in case of being subjected to external impact forces, the head support arm 90 is free from rotating forces around the rotational axis that connects the respective peaks of the two pivots 11a, 11b of the first base arm 91. Accordingly, it is possible to prevent the head slider 1 from bumping against the surface of the recording medium 12 causing damage to the magnetic head (not shown) and the recording medium 12 mounted in the head slider 1. That is, the head support arm 90 of the head support device 9 which is free from excessive vibration and reliable against external shocks and the like can be realized by designing it so that the center of gravity of the head support arm 90 is substantially same as middle point P (not shown) on the line that connects the support arm 2 and the respective peaks of the two pivots 11a, 11b of the first base arm 91. The head support arm 90 greatest in shock resistance can be realized when the center of gravity of the head support arm 90 corresponds to the middle point P, and it is also possible to realize the head support arm 90 having a practically sufficient shock resistance even in case of being off the middle point P provided that it is on the line connecting the respective peaks of the two pivots 11a, 11b of the first base arm 91.

Also, suppose the force that acts between the head support arm 90 and the respective peaks of two pivots 11a, 11b of the first base arm 91 is $F_4$, and

$$F_1 + F_2 + F_3 > F_4 \quad (7)$$

then, the head support arm 90 is parted from the two pivots 11a, 11b of the first base arm 91. However, when

$$F_1 + F_2 + F_3 \leq F_4 \quad (8)$$

then, the head support arm 90 is not parted from the two pivots, 11a, 11b of the first base arm 91. Force $F_4$ that satisfies these conditions is produced by an internal stress generated from the rotational moment created by the plate spring 4 that is an elastic member of the support arm 2, but it is possible to freely set the force as described above. Accordingly, it is easy to prevent the head support arm 90 from being parted from the two pivots 11a, 11b of the first base arm 91 even when subjected to impact forces.

Further, even against the impact force in the direction shown by R in Fig. 14, that is, in the direction parallel to the surface of the recording medium 12, if configured in that the center of gravity of the head support arm 90 corresponds to the rotational axis that connects the respective peaks of two pivots 11a, 11b of the first base arm 91, it is possible to prevent the head slider 1 from bumping against the recording medium 12 because no rotational moment is generated on the head support arm 90.

Also, in the head support device in the second preferred embodiment, almost the same configuration as described in the first preferred embodiment can be used as the configuration of the head slider. To avoid repeating the description, the detailed description of the head slider is omitted.

Only the remarkable differences from the head slider of the head support device in the first preferred embodiment will be described here. In the head support device in the second preferred embodiment of the present invention, head 97 mounted on the head slider 1 is disposed on the head slider 1 as shown in Fig. 15, which is positioned most apart from the pivot 11a that is the second bearing portion.

Suppose that external impact is applied to the head support device 9. Then, great impact load F is applied to the second bearing portion comprising the plate spring 4 being an elastic member and the pivot 11a for supporting the support arm 2, as shown by the downward arrow in Fig. 15. When an impact force greater than the above impact force is applied, a moment load as shown by arrow B is applied o the head slider 1 supported by the support arm 2 by means of flexure and dimple 14 as the support arm 2 rotates in the direction shown by arrow A. In the present preferred embodiment, the head 97 is mounted at the side apart from the pivot 11a of the support arm 2, and the air inflow side of the head slider 1 is higher in the amount of floatation than the air outflow side where the head 97 is mounted. Accordingly, even when moment B is generated due to the impact load F at the air inflow side being higher in the amount of floatation, the impact is absorbed by the portion being higher in the amount of floatation at the air inflow side, thereby preventing the head slider 1 from bumping against the recording medium 12. Further, since the head 97 is positioned at the side being free from bumping, the head slider 1 will not bump against the recording medium 12, thereby avoiding to give damage to the head 97.

Also, when an impact force is applied in the direction of moving the head slider 1 apart therefrom, as shown by the upward arrow in Fig. 16, great impact load F' is applied to the second bearing portion comprising the plate spring 4 being an elastic member and the pivot 11a for supporting the support arm 2. The support arm 2 rotates in the direction shown by arrow A', then a rotational moment acts on the head slider 1, causing a rotational force to be applied in the direction of arrow B' to move up the air inflow side of the head slider 1 and making the head 97 mounted on the air outflow side hard to come in contact with the disk. If the head 97 is in the opposite position, the head slider 1 side is moved up but the air inflow side becomes unstable and the amount of inflow air is varied causing the floatation of the slider to become unstable.

Since the head slider in the second preferred embodiment of the present invention has the same configuration as that of the first preferred embodiment, even when an impact force is applied to the head slider, it may prevent the head slider from bumping against the recording medium or decrease the bumping energy. In addition, in the second preferred embodiment of the present invention, the head is disposed at the outermost side of the head slider most apart from the pivot that becomes the second bearing portion, and thereby, it is possible to realize a disk drive which is excellent in shock resistance.

Thus, according to the second preferred embodiment, even in case of being subjected to external shocks, no rotational force is generated around the rotational axis that connects the respective peaks of two pivots of the first base arm. Accordingly, the head slider can be prevented from bumping against the surface of the recording medium and causing damage to the magnetic head and the recording medium mounted on the head slider, and it is possible to realize a head support arm of a head support device which is stable and free from excessive vibration.

Also, it becomes possible to increase the rigidity of the whole structure including the support arm without losing the flexibility thereof while increasing the activating force to the head slider. Further, since the individual component elements can be separately and independently installed, it is easy to design the head support arm and to expand the freedom of design.

Also, by disposing side reinforcements on either side of the support arm, or forming the plate spring that is an elastic member as another member using a flexible material, and the support arm with a highly rigid material, it is possible to increase the resonance frequency of the support arm, and there will arise no problem of vibration mode that has been a conventional problem. Accordingly, no settling operation is needed, and the support arm can be positioned by rotating it at a high speed and it becomes possible to improve the access speed of the magnetic recording and reproducing unit.

Further, it is not necessary to carry out forming (bending) of a very accurate elastic member (plate spring) that has been needed in a conventional head support. device, and it is possible to manufacture a head support arm and head support device by a simple process.

Also, according to the size of the recording medium, the length of the arm portion of either the first base arm or the second base arm can be changed and it is possible to obtain a practical configuration to cope with the standardization in the manufacture of magnetic recording and reproducing units having recording mediums of various sizes and types.

Further, the generation of vibration mode can be eliminated and the settling time can be shortened by increasing the resonance frequency of the support arm. Also, the support arm can be position by rotating it at a high speed and it is possible to realize a disk drive improved in access speed.

Also, in the head support arm in the second preferred embodiment, a pair of pivots as the bearing portion of the support arm are used for the description, but the present invention is not limited to this. It is preferable to used only one pivot. In this case, a configuration in which the support arm rotates only in the vertical direction can be realized by restricting the movement by the action of both the pivot and the plate spring that is an elastic member.

Also, in the second preferred embodiment, the pair of pivots serving as the rotational axis of the support arm are positioned symmetrical to the longitudinal center line of the support arm, but the present invention is not limited to this configuration.

In the head support arm of the second preferred embodiment of the present invention, a ⊐-shaped through-hole cut away in the peripheral portion of a tongue-shaped plate spring (elastic member) is shown as an example in Fig. 13 for the purpose of description, but the present invention is not limited to this shape, and needless to say, it is also preferable to cut away the portion into a U-shaped or V-shaped trapezoidal form.

In the preferred embodiment of the present invention, a head support device of a magnetic recording and reproducing unit using a magnetic head is described, but the head support device of the present invention will also bring about similar effects even when it is used as a head support device for a non-contact type disk recording and reproducing unit such as an optical disk drive and optical magnetic disk drive.

As described above, using the head support device of the present invention, it is possible to provide a head support device having high flexibility and shock resistance and capable of high-speed access while applying a sufficient load to the head, and in addition, with use of the head support device of the present invention, the support arm can be vertically moved, it is possible to keep the head away from the recording medium when the rotation of the recording medium is stopped.

Also, since it is configured in that the support arm having a head slider mounted with a head at one end thereof and the first base arm are secured via a plate spring that is an elastic member, and two pivots are disposed on either the support arm or the first base arm, and the support arm is rotated toward the surface of the recording medium by the push forces of the respective peaks of the two pivots, thereby pushing the head slider to the surface of the recording medium, there is no generation of rotational force around the line (rotational axis) that connects the respective peaks of two pivots disposed on either the first base arm or the support arm when subjected to an external impact force. Accordingly, it is possible to prevent the head slider from bumping against the surface of the recording medium and causing damage to the head mounted with a head slider and the recording medium, and to realize a head support arm of a head support device which is stable and free from excessive vibration. And, by using a head support device mounted with such a head support arm, it is possible to realize a disk drive which assures excellent reliability such as high shock resistance and high access speed.

Further, even when a great impact force is applied while the head slider is being afloat over the recording medium, the head slider can be prevented from bumping against the recording medium surface or the bumping energy can be lessened to prevent the head slider or the recording medium from being damaged. As a result, a highly reliable head support device and disk drive can be manufactured, and it is possible to mount a large-capacity, small-sized and thin disk drive in portable equipment.

## Claims

1. A head support device comprising a head, a support arm with said head disposed at one end thereof and an elastic member formed near the other end, and a first base arm having a coupling portion projected at one end thereof;
   wherein the end of said elastic member is fixed on said first base arm, and said support arm or said first base arm is provided with a vertical rotation supporting point.

2. A head support device comprising a head, a support arm with said head disposed at one end thereof and an elastic member formed near the other end, and a first base arm having a coupling portion projected at one end thereof,
   wherein the end of said elastic member is fixed on said first base arm, and said support arm or said first base arm is provided with a vertical rotation supporting point, and
   a head is disposed on a surface opposing to the recording medium of said head slider, apart from the vertical rotation supporting point in the longitudinal direction of said support arm.

3. The head support device of claim 1 or claim 2, wherein said elastic member is formed in one-piece with said support arm along the longitudinal center line of said support arm close to the other end of said support arm at the opposite side of said head.

4. The head support device of claim 1 or claim 2, wherein said head is mounted on a head slider, and said head slider is disposed at said one end of said support arm via a flexure.

5. The head support device of claim 4, wherein a balancer is fitted on the other end of said support arm across said vertical rotation supporting point from said slider.

6. The head support device of claim 5, wherein when an external impact force is applied to said head slider, suppose the distance from the action point of load that activates said head slider toward the recording medium to the immovable point of said head slider rotated in the direction of pitch is Lo, and the length in the direction of air flow from the air inflow end to the air outflow end of said head slider is Ls, then $0.5<Lo/Ls<2$.

7. The head support device of claim 5, wherein when an external impact force is applied to said head slider, suppose the distance from the action point of load that activates said head slider toward the recording medium to the immovable point of said head slider rotated in the direction of pitch is Lo, the length in the direction of air flow from the air inflow end to the air outflow end of said head slider is Ls, the pitch angle of said head slider in a state of being afloat over the recording medium surface is $\theta p$, and the amount of floatation from the recording medium surface at the air outflow end of said head slider is Xt, then

$$1 \leq Lo/Ld \leq 2.5$$

   where the surface opposing to recording medium is configured in that $Ld = (Ls / 2) + (Xt / \tan(\theta p))$.

8. The head support device of claim 1 or claim 2, wherein said elastic member is symmetrical to the longitudinal center line of said support arm and is formed into a tongue-like shape provided with a U-shaped or V-shaped or ⊐-shaped through-hole in the peripheral portion thereof.

9. The head support device of claim 1 or claim 2, wherein said vertical rotation supporting point disposed on said support arm or said first base arm includes two pivots.

10. The head support device of claim 9, wherein the overall center of gravity, that is a total of the respective centers of gravity of head slider, flexure, said support arm, and said balancer, is positioned on a plane vertical to the recording medium including the line that connects the respective peaks of the two pivots for setting the mass, the center of gravity, and the fitting position of said balancer.

11. The head support device of claim 9, wherein the two pivots are disposed symmetrical about the longitudinal center line of said support arm.

12. The head support device of claim 1 or claim 2, wherein a side reinforcement is disposed at the longitudinal side of said support arm.

**13.** The head support device of claim 12, wherein said side reinforcement is formed by bending.

**14.** The head support device of claim 1 or claim 2, wherein there is provided a second base arm having a hole for fastening to the coupling portion of said first base arm at one end thereof, a bearing portion, and a driving means at the other end.

**15.** The head support device of claim 6 or claim 7, wherein the immovable point is obtained from the ratio of rotational rigidity of air layer generated between the surface opposing to recording medium of said head slider and the recording medium to rotational rigidity with respect to vertical displacement.

**16.** The head support device of claim 5, wherein a positive pressure generator disposed on the surface opposing to recording medium comprises:

a first positive pressure generator formed so as to be perpendicular to the direction of air flow at a predetermined position from the air inflow end of said head slider, and
a second positive pressure generator formed at a predetermined position from an air outflow end at the widthwise center rectangular to the direction of air flow of said head slider, and
a negative pressure generator is disposed in the middle of the first positive pressure generator and the second positive pressure generator, which is formed so that the center of negative force is positioned a little closer to the air outflow end than to the action point of the negative force that activates said head slider toward the recording medium.

**17.** The head support device of claim 16, wherein side rails are disposed on either widthwise side of said head slider so as to be connected to the first positive pressure generator.

**18.** The head support device of claim 17 or claim 17, wherein said negative pressure generator is disposed in an almost surrounded region at a middle stage that is lower than the surface of said positive pressure generator and higher than the surface of said negative pressure generator with reference to the surface of said positive pressure generator.

**19.** The head support device of claim 6, wherein the action point of negative force that activates said head slider toward the recording medium corresponds to the center of gravity of said head slider.

**20.** The head support device of claim 4, comprising a head slider holding portion which holds said head slider, and a head support arm having a support arm which holds the other end of said head slider.

**21.** The head support device of claim 6 or claim 7, wherein a suction toward the recording medium generated on the air lubricated surface of the head slider is greater than the equivalent mass of the head support device.

**22.** A disk drive, comprising:

a recording medium with a recording medium layer formed on the surface thereof;
a rotational driving means for rotating said recording medium; and
a head support device having a head slider mounted with a head at one end thereof, and with a driving means at the other end,

wherein said head support device comprises a support arm provided with a head at one end thereof and integrally formed with an elastic member along the longitudinal center close to the other end; a balancer fitted to the other end of said support arm; and a first base arm having a coupling portion projected at one end thereof, and the end of said elastic member is fixed on said first base arm, and said support arm or said first base arm is provided with a vertical rotation supporting point.

**23.** A disk drive, comprising:

a recording medium with a recording medium layer formed on the surface thereof;
a rotational driving means for rotating said recording medium; and
a head support device having a head slider mounted with a head at one end thereof, and with a driving means at the other end,

wherein said head support device comprises a support arm provided with a head at one end thereof and integrally formed with an elastic member along the longitudinal center close to the other end; a balancer fitted to the other end of said support arm; and a first base arm having a coupling portion projected at one end thereof, and the end of said elastic member is fixed on said first base arm, and said support arm or said first base arm is provided with a vertical rotation supporting point, and said head, opposing to the recording medium of said head slider, is disposed apart from the vertical rotation supporting point in the longitudinal direction of said support arm.

Fig. 1

(a)

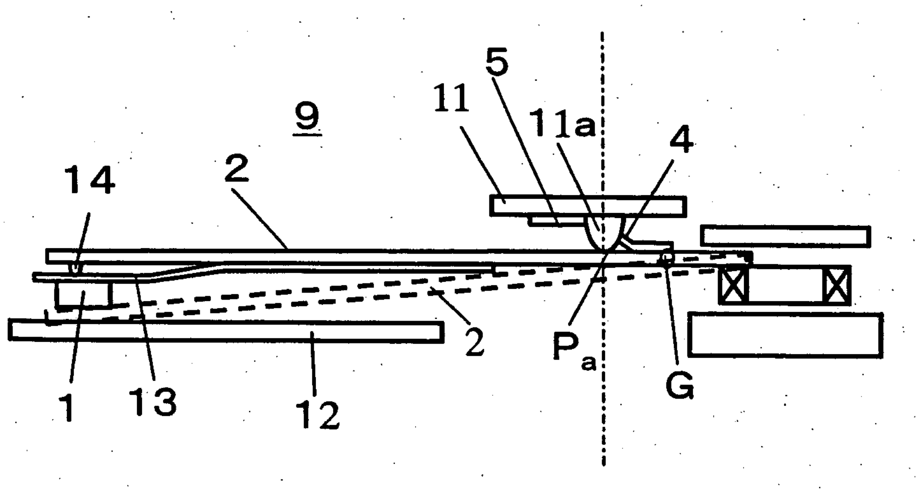


(b)

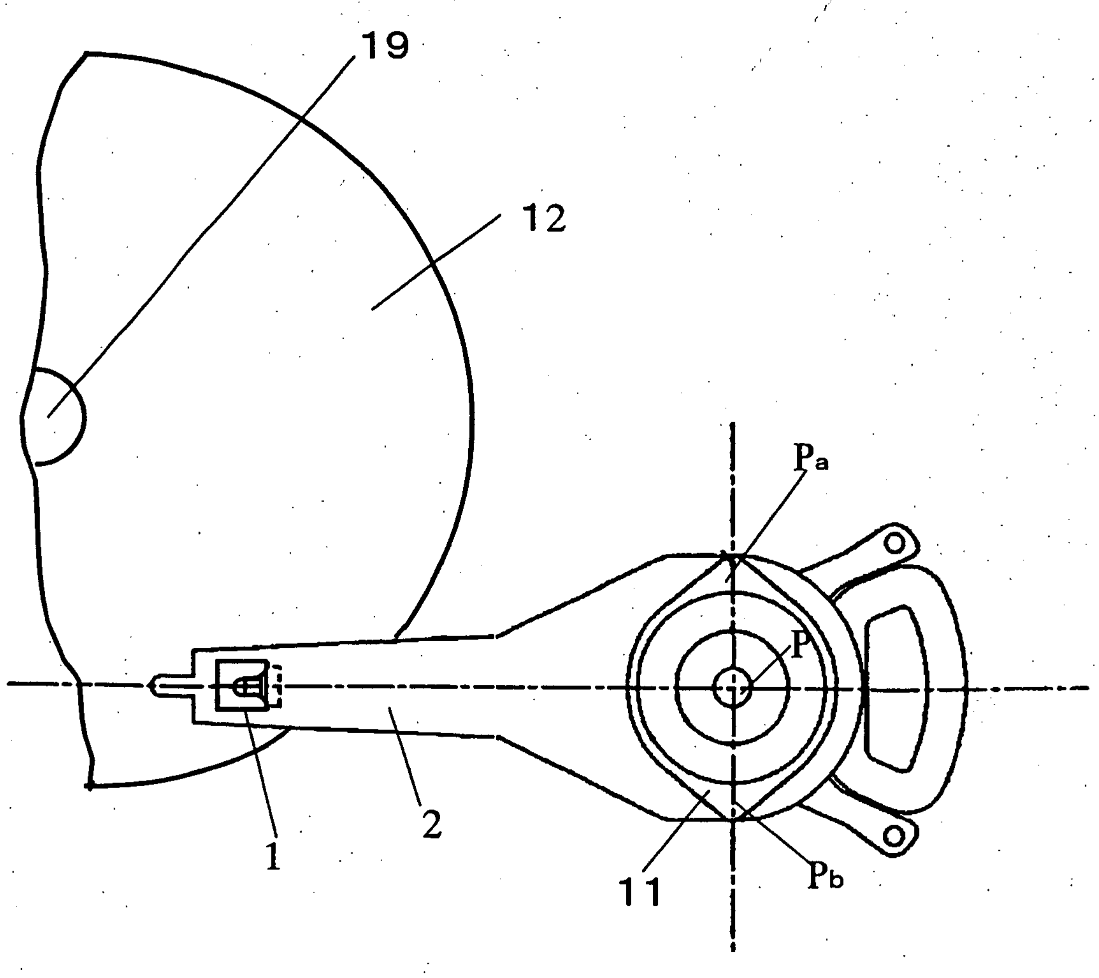

Fig. 2

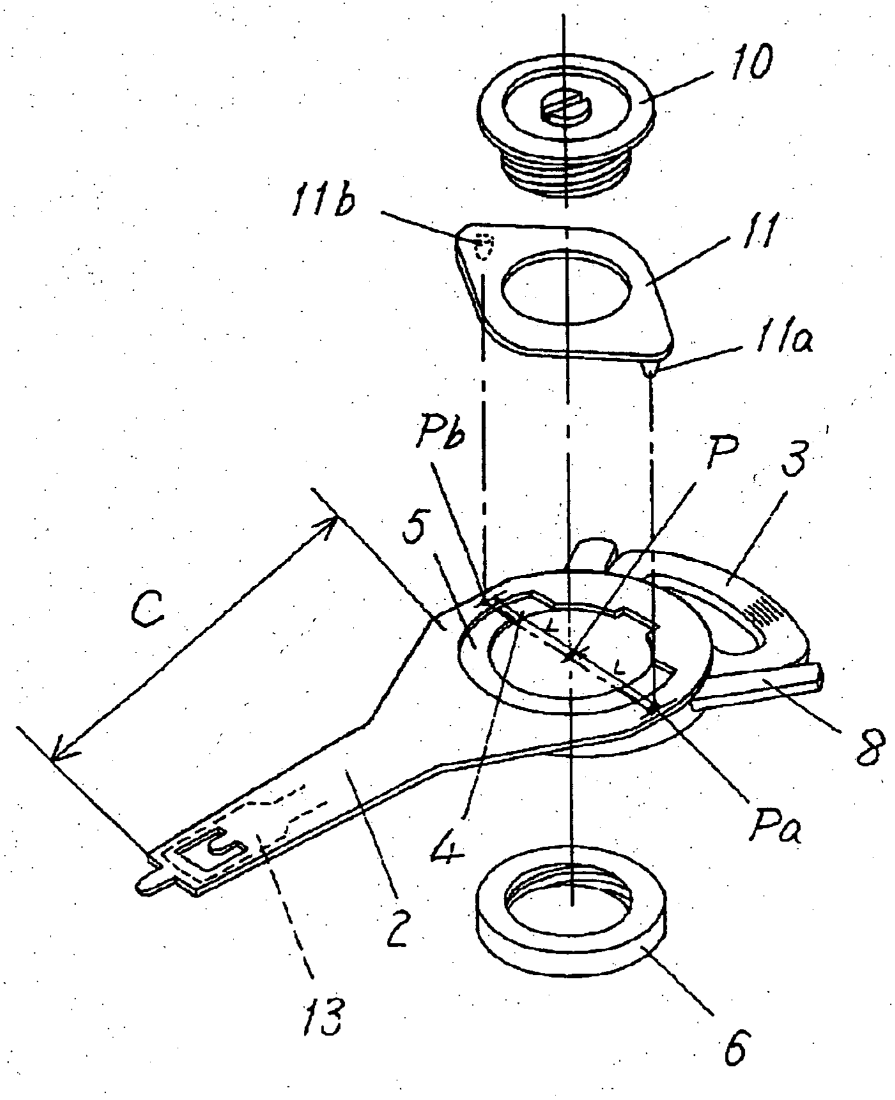

Fig. 3

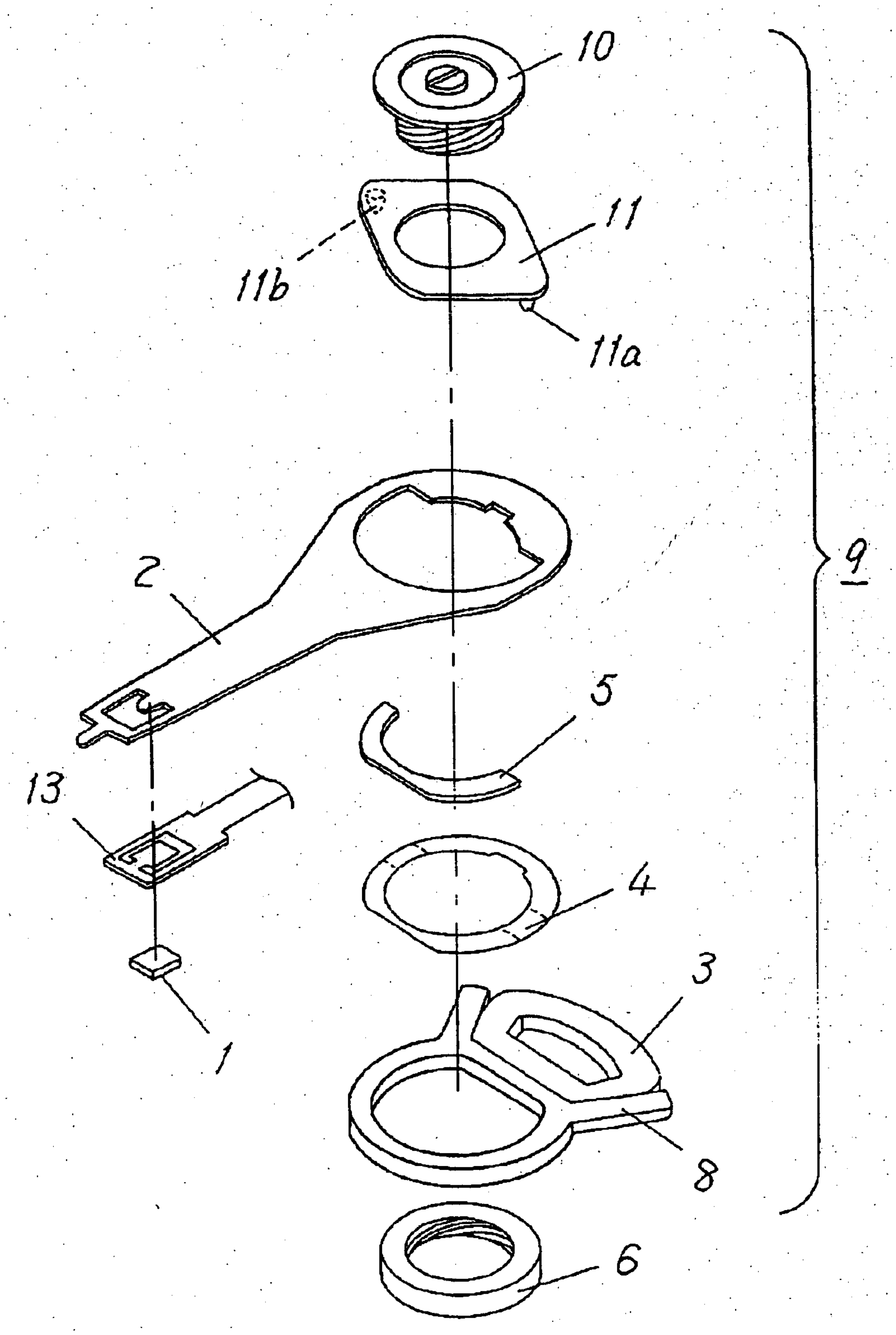

Fig. 4

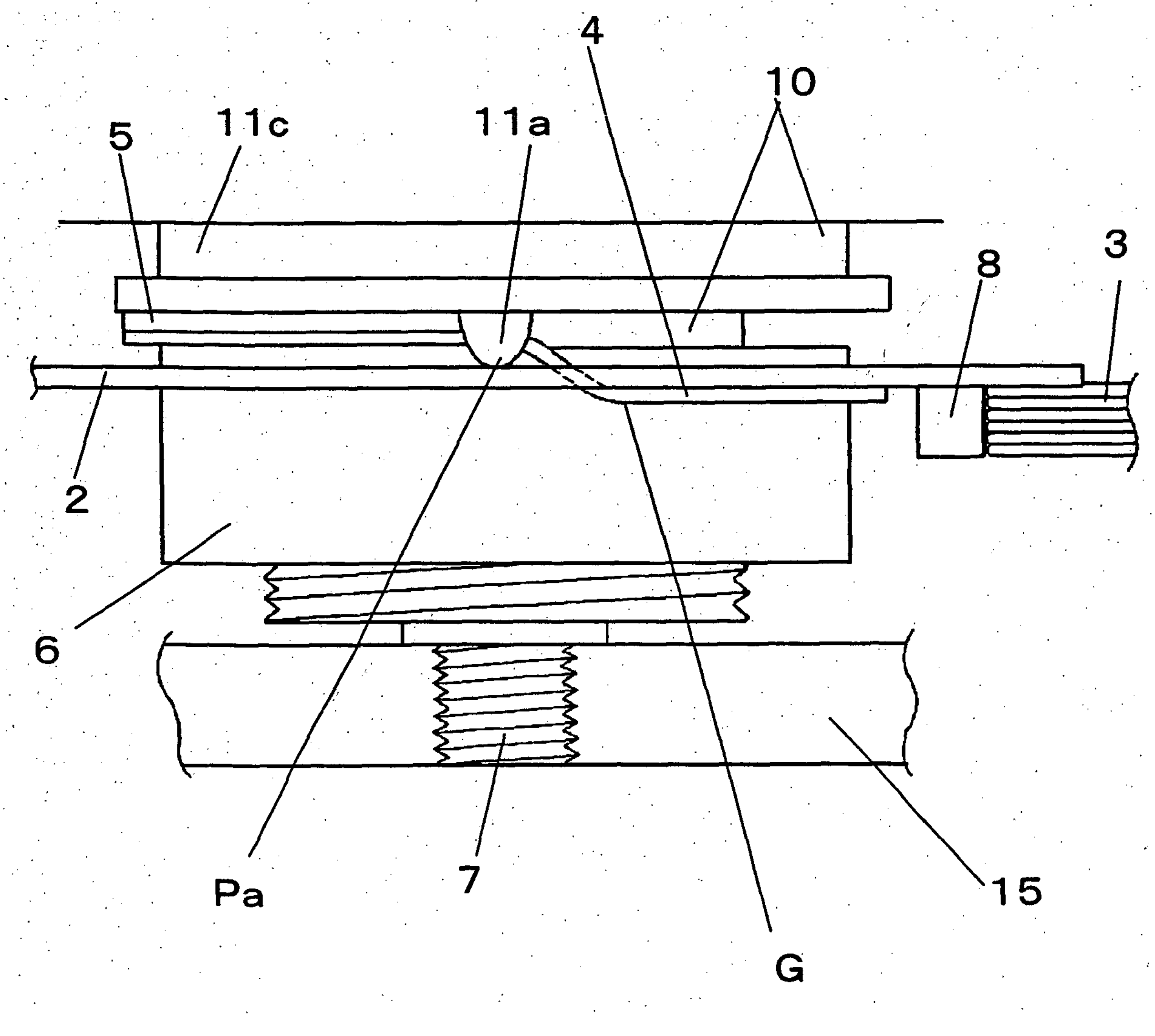

Fig. 5

(a)

(A)

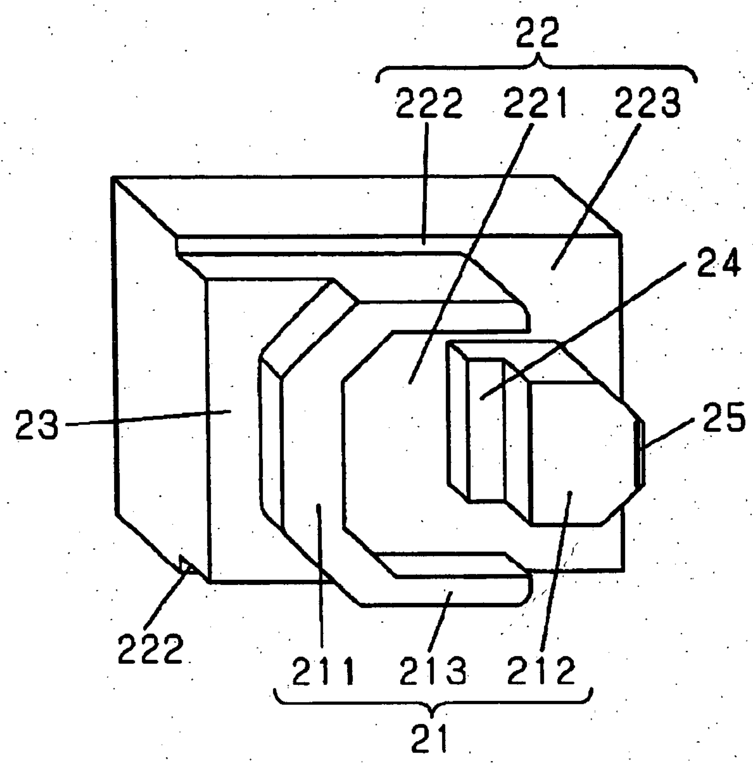


20

(b)

(B)

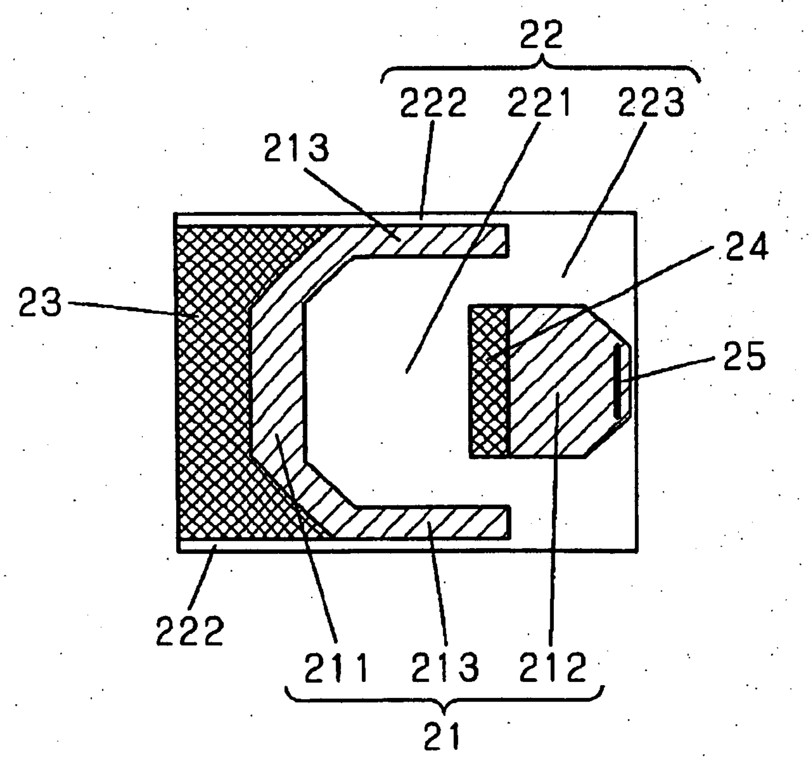


26

Fig. 6

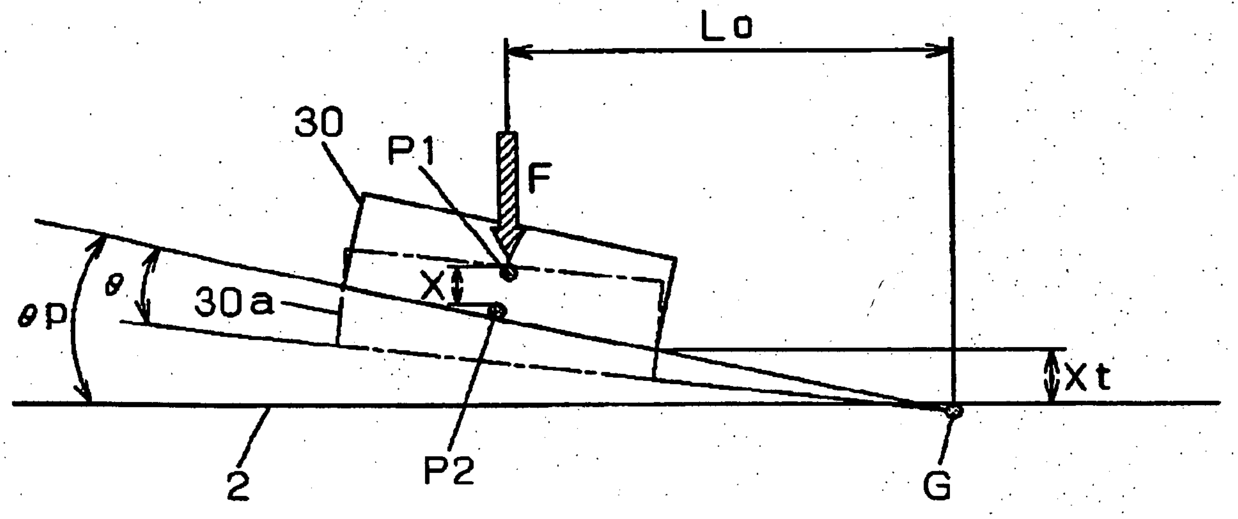

Fig. 7

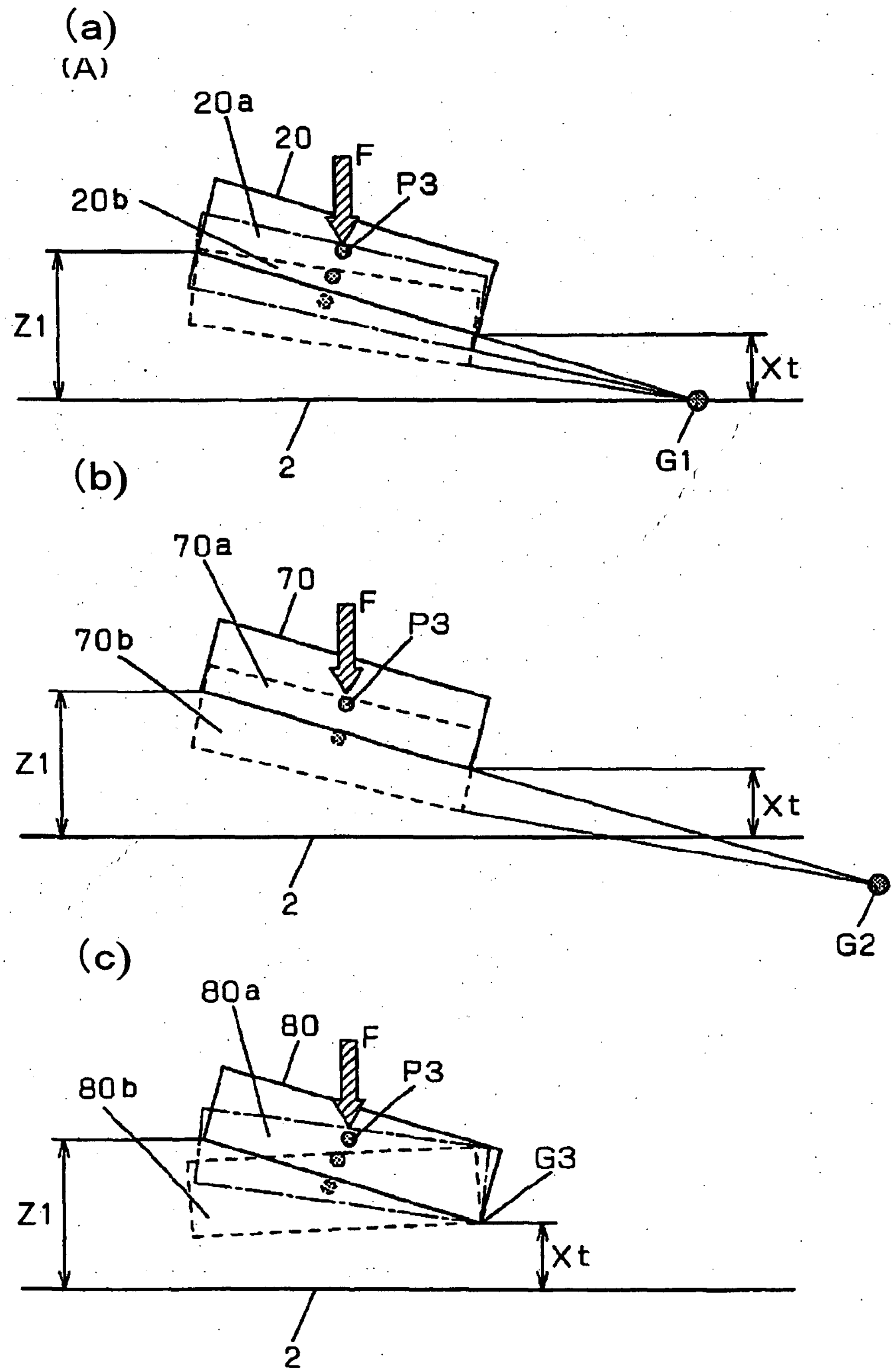

(a)
(A)
20a
20
F
P3
20b
Z1
Xt
2
G1
(b)
70a
70
F
P3
70b
Z1
Xt
2
G2
(c)
80a
80
F
P3
80b
G3
Z1
Xt
2

Fig. 8

(a)

(A)

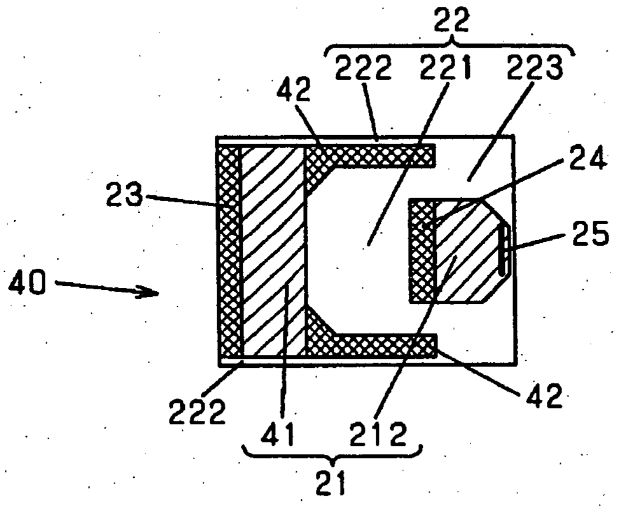

22
222
221
223
42
24
23
25
40
42
222
41
212
21


(b)

(B)

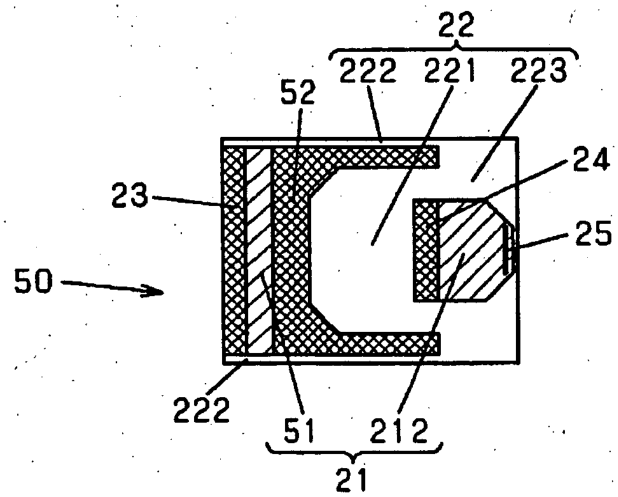

22
222
221
223
52
24
23
25
50
222
51
212
21


(c)

(C)

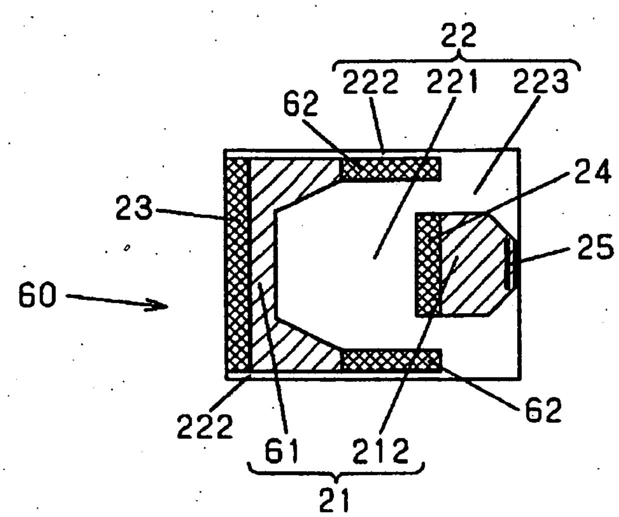

22
222
221
223
62
24
23
25
60
62
222
61
212
21

Fig. 9

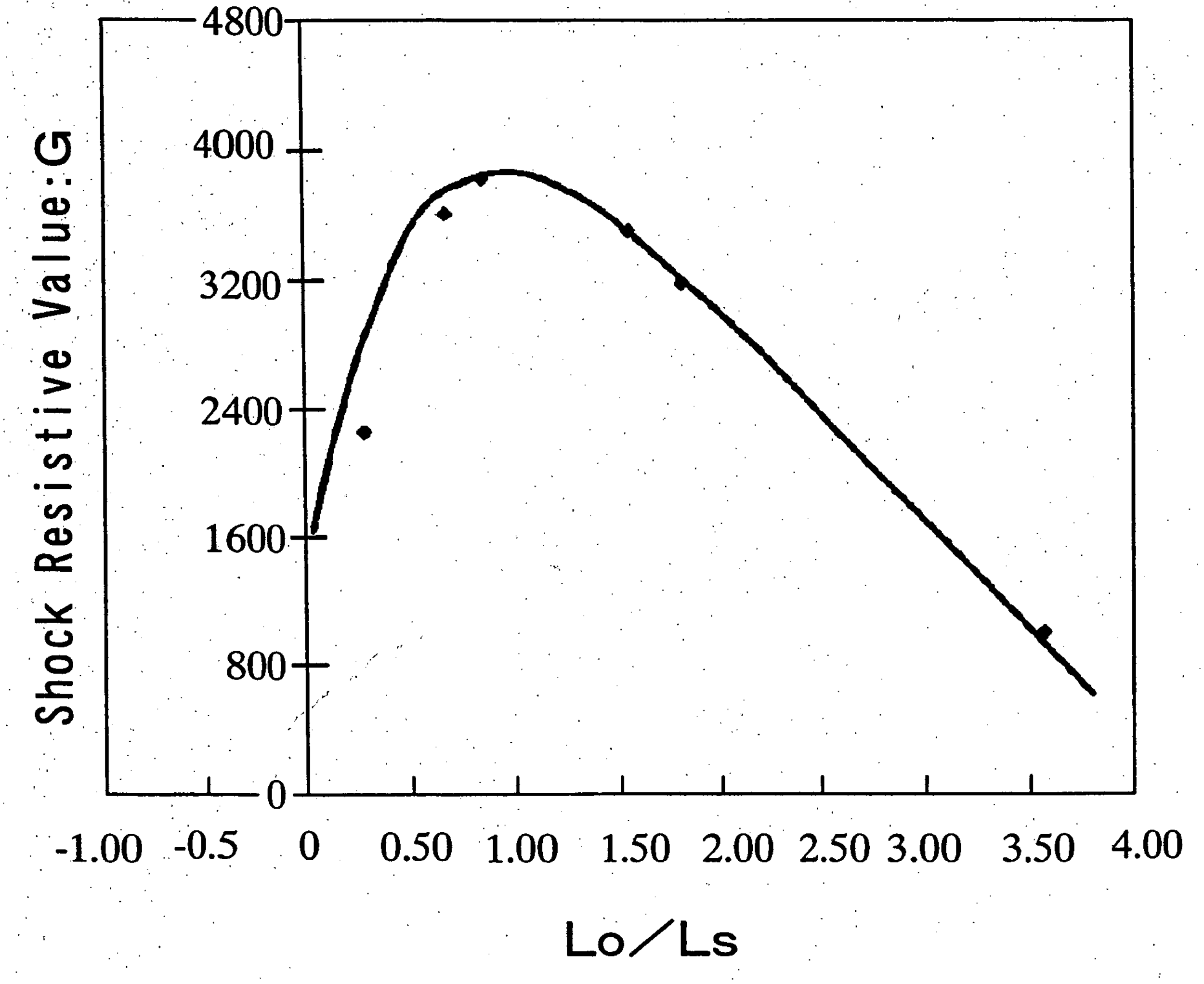
Shock Resistive Value:G
4800
4000
3200
2400
1600
800
0
-1.00
-0.5
0
0.50
1.00
1.50
2.00
2.50
3.00
3.50
4.00
Lo/Ls

Fig. 10

(a)

(A)

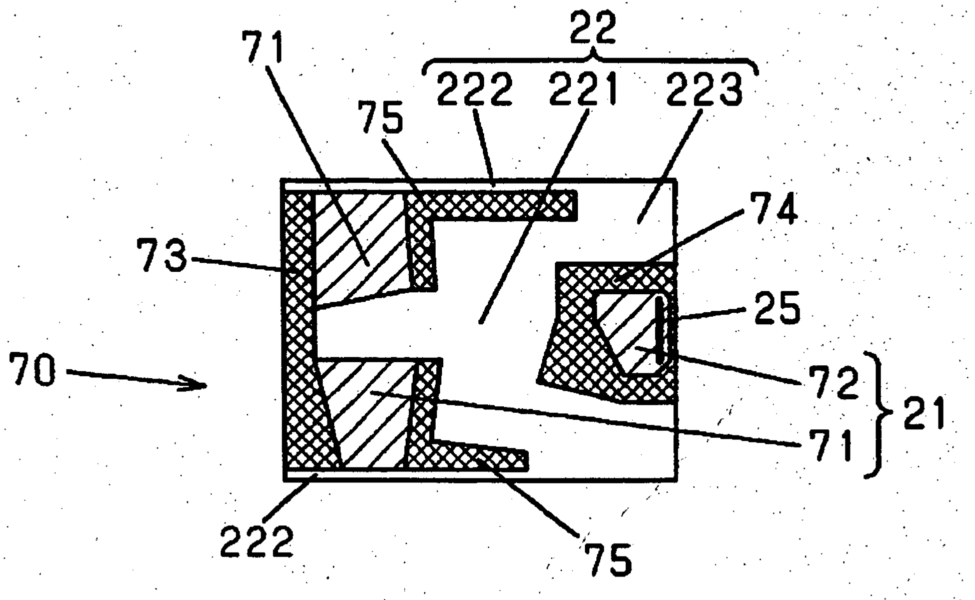

22
71
222
221
223
75
74
73
25
70
72
21
71
222
75


(b)

(B)

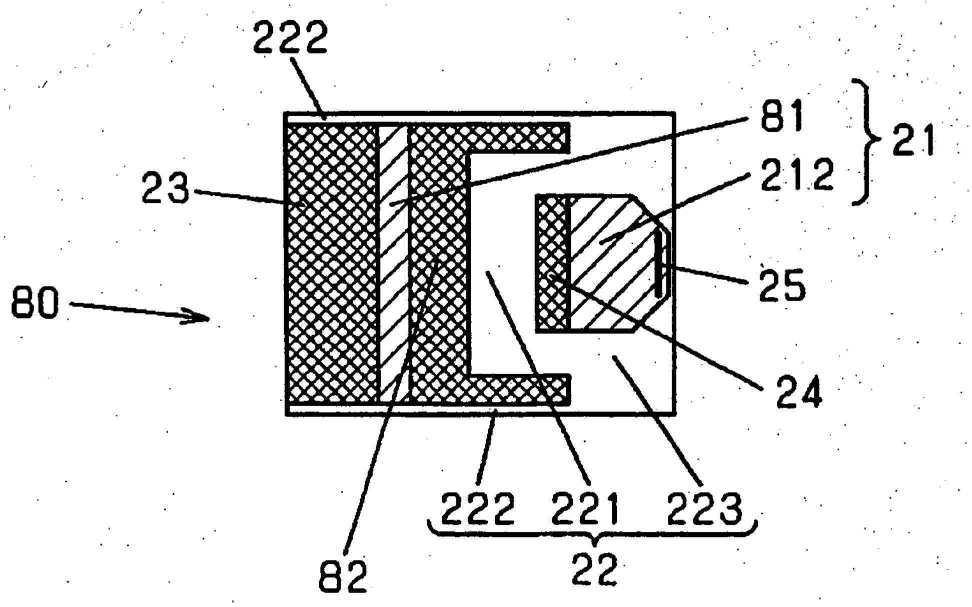

222
81
21
212
23
25
80
24
222
221
223
82
22

Fig. 11

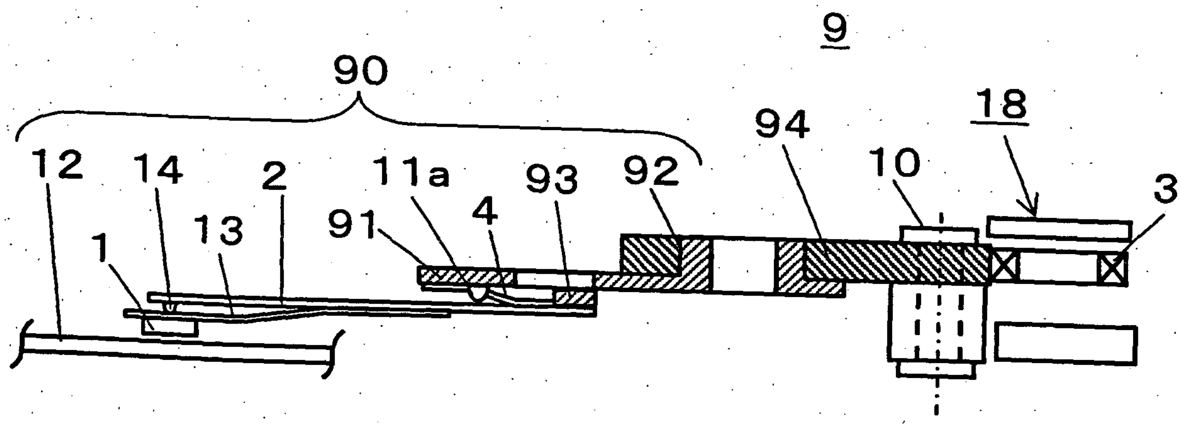

Fig. 12

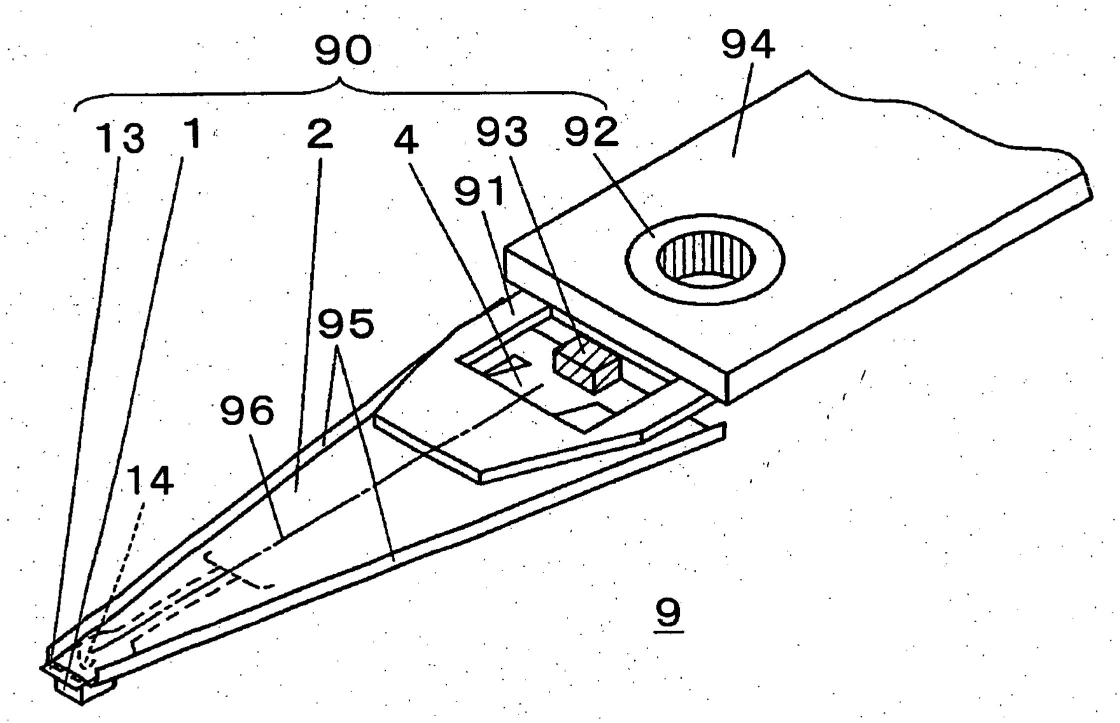

Fig. 13

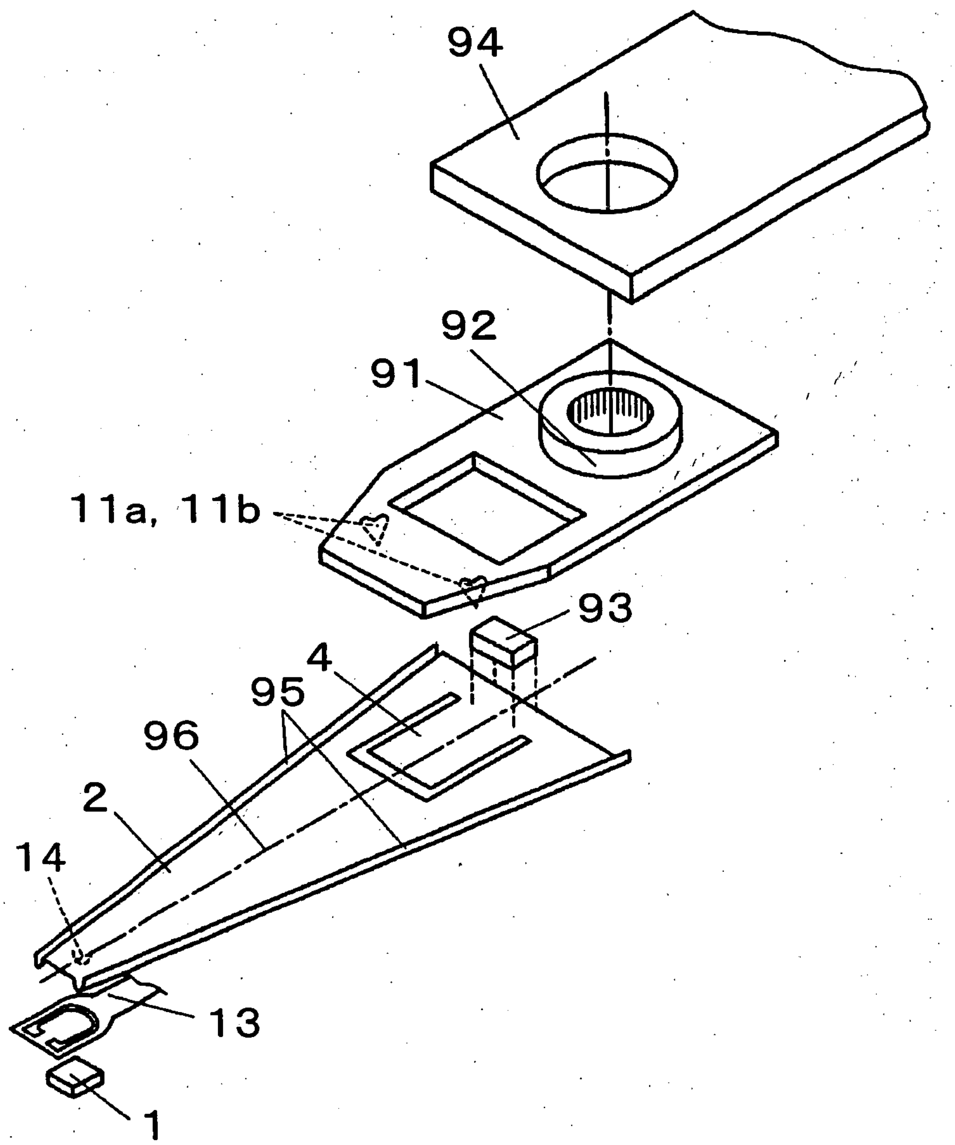

Fig. 14

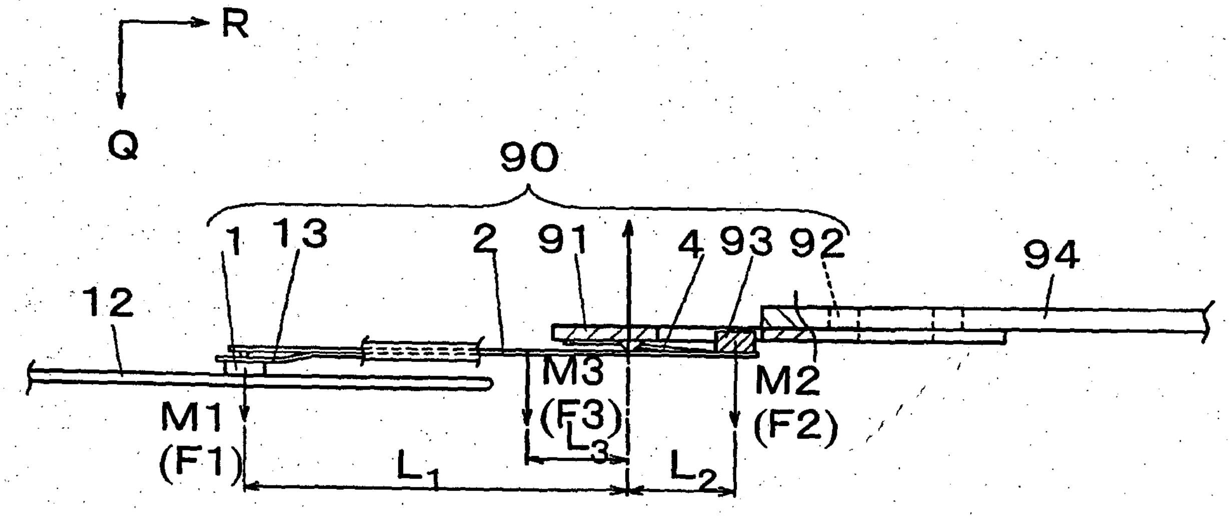

Fig. 15

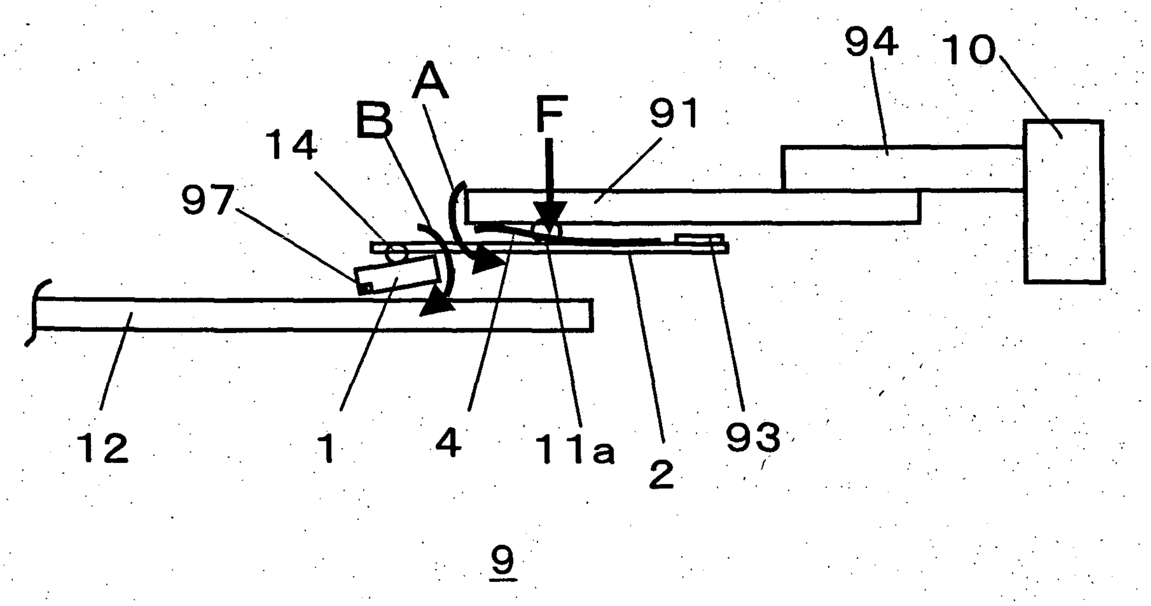

Fig. 16

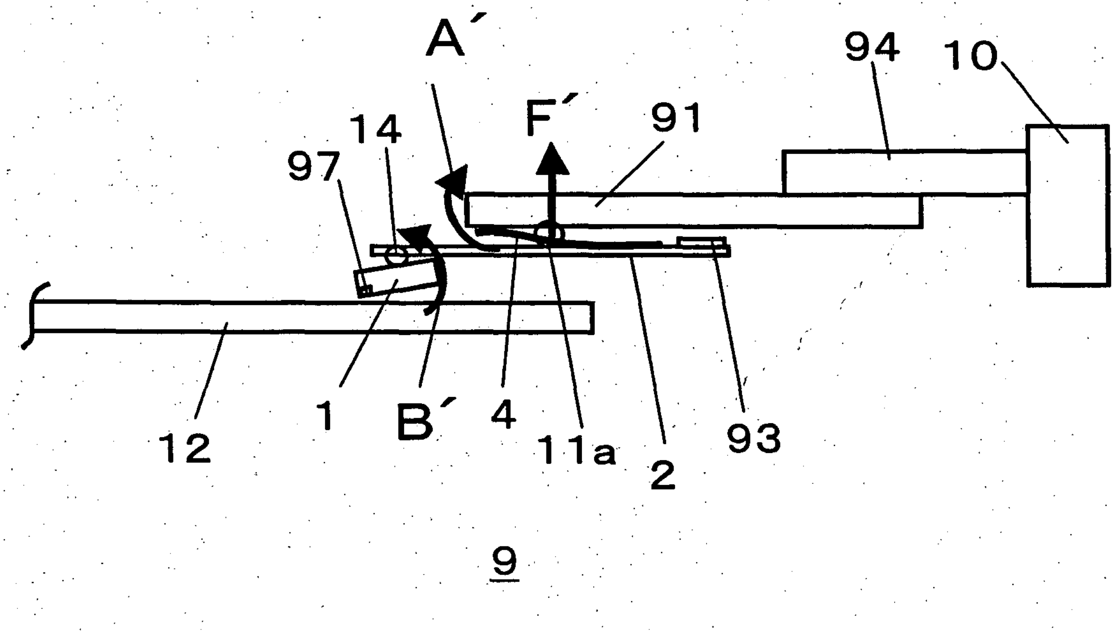

Fig. 17

PRIOR ART

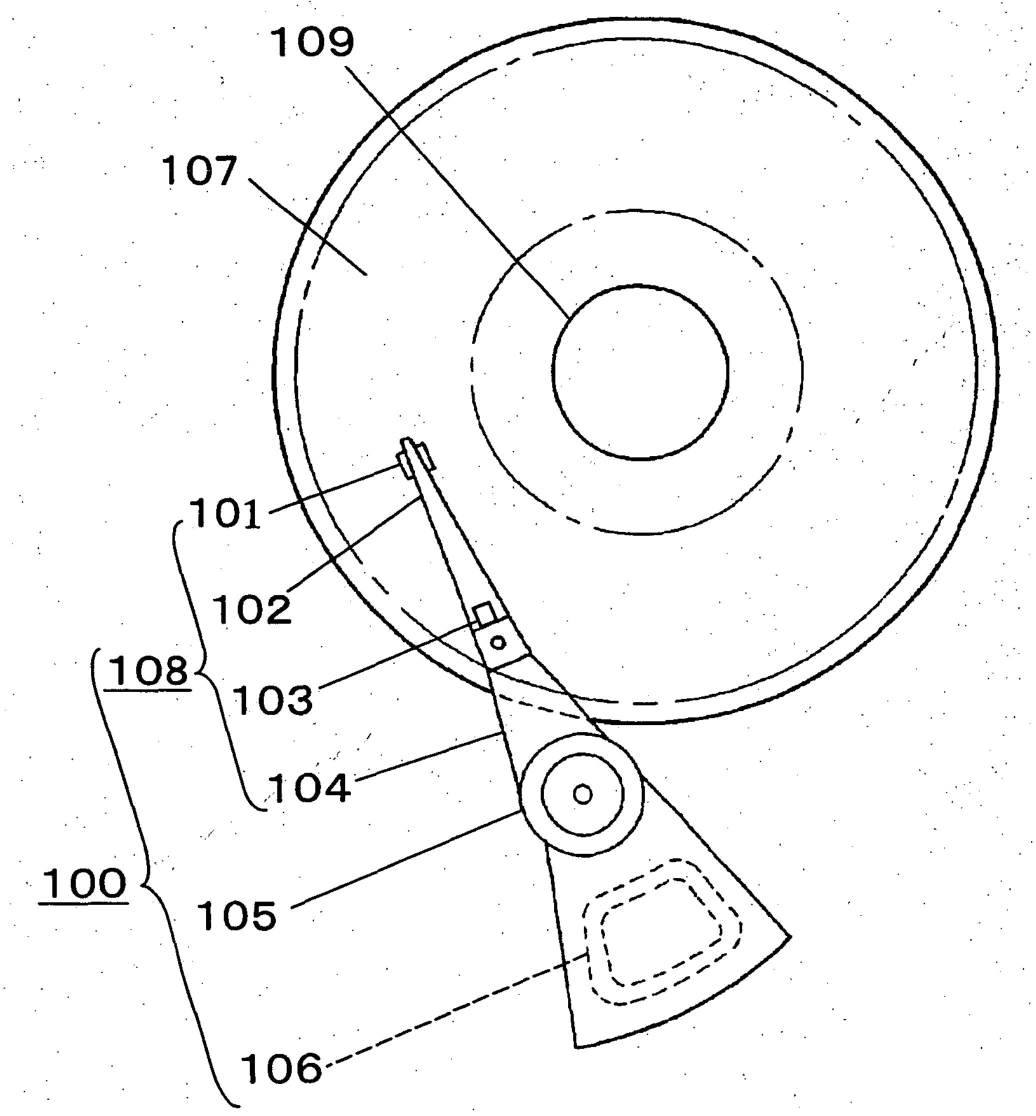

Fig. 18

PRIOR ART